# EUROPEAN PATENT APPLICATION

(11) **EP 4 549 474 A1**
(43) Date of publication of application: **07.05.2025**
(21) Application number: 23831336.5
(22) Date of filing: 26.06.2023
(51) Int. Cl.: C08F 220/10, C08F 220/06, C08L 33/00

(54) **RESIN, RESIN DISPERSION, AND RESIN COMPOSITION**

(30) Priority: 30.06.2022 JP 2022106728
(71) Applicant: DNP Fine Chemicals Co., Ltd., Yokohama-shi, Kanagawa 226-0022 (JP)
(72) Inventor: KOTAKI Tomohiro, Yokohama-shi, Kanagawa 226-0022 (JP); INAMI Yuri, Yokohama-shi, Kanagawa 226-0022 (JP); ARAI Tomoyuki, Yokohama-shi, Kanagawa 226-0022 (JP); IIJIMA Kyoichi, Yokohama-shi, Kanagawa 226-0022 (JP)
(74) Representative: Hasegawa, Kan
(86) International application number: PCT/JP2023/023457
(87) International publication number: WO 2024/004894

(57) **Abstract**

Provided is a resin exhibiting high storage stability even when included in a resin composition and which, by being included in a resin composition, makes it possible to form a coating film of the resin composition having solvent resistance on the coating surface thereof.

The resin includes a copolymer containing monomer A and monomer B below as structural units. Monomer A: a monomer having at least one ring structure selected from the group consisting of an alicyclic structure, a heterocyclic structure and an aromatic ring structure. Monomer B: a monomer having an acid group or a basic group.

## Description

### TECHNICAL FIELD

The present invention relates to a resin, a resin dispersion, and a resin composition.

### BACKGROUND ART

It is known that various resin compositions, such as a composition for forming a recording layer on a surface of a base material (recording medium) or the like by dissolving or dispersing various color materials in a solvent, and an overcoat ink for forming an overcoat layer on a surface of a recorded product, contain a resin for imparting friction resistance or the like to the surface of the base material.

For such a resin, a resin dispersion including a dispersible resin dispersed in water or water and a water-soluble organic solvent is known. For example, Patent Document 1 describes a technology relating to an acrylic resin emulsion obtained by emulsion polymerization of an amino group-containing acrylic monomer partially or entirely neutralized with an organic acid and a monomer mainly composed of alkyl (meth)acrylate in the presence of a cationic or nonionic emulsifier.

Patent Document 1 mentions that this acrylic resin emulsion is excellent in water resistance.

### Citation List

### Patent Document

Patent Document 1: Japanese Unexamined Patent Application, Publication No. 2002-322218

### DISCLOSURE OF THE INVENTION

### Problems to be Solved by the Invention

A resin composition to be applied to surfaces of various base materials includes a liquid medium (including a solvent and a liquid dispersion medium). Then, this resin composition is attached to the surface of the base material (recording medium) or a recorded product, and the liquid medium included in the resin composition volatilizes and the contained components such as resin are fixed on the surface to form a recording layer, a primer layer, an overcoat layer, and other layers having respective functions. On the other hand, from the viewpoint of productivity, it is preferable to dry at as low a temperature as possible to form layers having the respective functions.

However, the inventors have studied and revealed that when the resin composition attached to the surface of a base material (recording medium) is dried at low temperatures, the film forming properties become insufficient, which affects the solvent resistance of the resulting recorded product.

Furthermore, when the resin included in the resin composition aggregates in the resin composition, the properties of the resin composition may change, for example, the viscosity of the resin composition may change. In this way, the resin composition preferably has high storage stability.

An object of the present invention is to provide a resin which exhibits high storage stability even when the resin is contained in a resin composition and which is capable of forming a coating film of a resin composition having a solvent resistance on the surface of the coating film, by being included in the resin composition.

### Means for Solving the Problems

The present inventors have extensively studied in order to solve the above-mentioned problems, resulting in finding that a resin containing a copolymer including a specific monomer as a constituent unit can solve the above-mentioned problems, and have completed the present invention. Specifically, the present invention provides the following.

(1) A resin containing a copolymer including the following monomer A and monomer B as constituent units:
   a monomer A: a monomer having at least one or more ring structures selected from the group consisting of an alicyclic structure, a heterocyclic structure or an aromatic ring structure, and
   a monomer B: a monomer having an acidic group or a basic group.
(2) A resin dispersion containing the resin as described in (1) as a polymer fine particle dispersion.
(3) The resin dispersion as described in (2), in which the resin contained as the polymer fine particle dispersion is an emulsion polymer.
(4) The resin dispersion as described in (2) or (3), in which a content of unreacted monomers derived from the copolymer is 0.1% by mass or less with respect to a total amount of the resin dispersion.
(5) The resin dispersion as described in any one of (2) to (4), in which a side chain moiety SP value, which is an SP value calculated for a chemical structure moiety defined by R₂ in the following formula (1) of the monomer A, is 8.0 or more and 11.0 or less:

   CH₂ = C(R₁) - R₂ Formula (1)

   ... (R₁ is hydrogen or a methyl group).
(6) The resin dispersion as described in any one of (2) to (5), in which the monomer A has a water/1-octanol distribution coefficient (Log P) of 1.9 or more and 4.8 or less.
(7) The resin dispersion as described in any one of (2) to (6), in which the resin has a Tg of 0°C or more and 120°C or less.
(8) The resin dispersion according to any one of (2) to (7), including the monomer A in a proportion of 50% or more with respect to a total amount of the copolymer, and
   the monomer B in a proportion of 0.1% or more and 10% or less with respect to the total amount of the copolymer.
(9) A resin composition containing the resin dispersion according to (2) to (8).

### Effects of the Invention

The resin of the present invention has high storage stability even when the resin is contained in a resin composition, and as a result of being contained in the resin composition, the resin can form a coating film of the resin composition having solvent resistance on the applied surface.

### PREFERRED MODE FOR CARRYING OUT THE INVENTION

Hereinafter, specific embodiments of the present invention will be described in detail. However, the present invention is not limited to the following embodiments, and can be implemented with appropriate modifications within the scope of the purpose of the present invention.

### <<1. Resin>>

The resin according to this embodiment contains a copolymer including the following monomer A and monomer B as constituent units.

Monomer A: a monomer having at least one ring structure selected from the group consisting of an alicyclic structure, a heterocyclic structure and an aromatic ring structure. Monomer B: a monomer having an acidic group or a basic group.

A resin composition containing a copolymer including such a monomer as a constituent unit has high storage stability, and can form a coating film of the resin composition having solvent resistance on the applied surface when the copolymer is contained in a resin composition.

In this description, for convenience, the constituent monomer is a monomer that constitutes a polymer before reaction, and is described as meaning a polymerizable compound having a reactive group such as an ethylenically unsaturated multiple bond, but actually, when a monomer is included as a constituent unit, it is included not in a state of the monomer before reaction, but in a state in which one of the multiple bonds is lost by polymerization, forming a copolymer as after polymerization.

Furthermore, the monomer may be a monomeric polymerizable compound having a reactive group such as an ethylenically unsaturated multiple bond, and may be a monomer with a large molecular weight, which is referred to as an oligomer in this description.

Hereinafter, the monomer A, the monomer B, and other monomers constituting this copolymer will be described.

### (Monomer A)

A monomer A is a monomer having at least one or more ring structures selected from the group consisting of an alicyclic structure, a heterocyclic structure and an aromatic ring structure.

When such a ring structure is provided in the side chain moiety of the monomer, even when drying is carried out at low temperatures, the film-forming properties of the resin composition are improved and the coating film of the resin composition with solvent resistance can be formed.

Alicyclic structures include cycloalkanes as monocyclic compounds including three or more carbon-carbon single bonds (for example, cyclopropane, cyclobutane, cyclopentane, cyclohexane, cycloheptane, cyclooctane, cyclononane, cyclodecane), and cycloalkanes as polycyclic compounds (dicyclopentane, norbornane, adamantane), and the like.

A heterocyclic structure is a cyclic compound including carbon and one or more other elements (for example, at least one selected from the group consisting of oxygen, nitrogen, sulfur, phosphorus, boron, and silicon) in the ring.

The aromatic ring structure is a cyclic hydrocarbon exhibiting aromatic properties, for example, a benzene ring or a naphthalene ring.

Furthermore, among these monomers A, the side chain moiety SP value, which is the SP value calculated for the chemical structure moiety defined by R₂ in the following formula (1), is preferably 12.0 or less.

CH₂ = C(R₁) - R₂ Formula (1)

(R₁ is hydrogen or a methyl group).

Herein, the side chain moiety SP value means a solubility parameter (SP) value of the "-R₂" moiety in the formula (1), and similar to the SP value, means the √(A/B) value when the functional group constituting "-R₂" is decomposed, the total value of ΔEoh (cal/mol) is defined as A and the total value of ΔV (cm³/mol) is defined as B. Note here that ΔEoh and ΔV are numerical values specific to each substituent, and the Fedors numerical values were used as reference. For example, in the case of butyl acrylate (or butyl methacrylate), "-R₂" becomes "-COO-(CH₂)₃-CH₃", so when calculation is carried out using ΔEoh and ΔV in Table 1 below, the side chain moiety SP value = √ ((1125+1180X3+4300) / (33.5+16.1X3+18.0)) = 9.48 is obtained.

**[Table 1]**

| Type of functional group | Number of functional groups | ΔEoh (cal/mol) | ΔV (cm³/mol) |
|---|---|---|---|
| -COO- | 1 | 4300 | 18.0 |
| -CH₂- | 3 | 1180 | 16.1 |
| -CH₃ | 1 | 1125 | 33.5 |

By setting the SP value of the side chain moiety of the monomer A within a predetermined range, the solvent resistance of the resulting recorded product can be increased (among them, the ethanol resistance can be increased).

The research conducted by the present inventors has revealed that the physical properties of coating films containing a polymer are often greatly influenced by the side chain moiety of the polymer rather than by the main chains of the polymers contained in the coating films. It is considered that including, as a constituent unit, a monomer having a SP value, which is the SP value of the "-R₂" moiety of the formula (1), controlled within a predetermined range, can influence the physical properties of the coating film, and that a coating film that can exhibit an effect of the present invention can be formed.

In general, the SP value is called a solubility parameter, and it is known that the smaller the difference between the SP values of two components is, the higher the solubility becomes. Since the SP value of ethanol is 12.7, the further the distance is, the higher the solvent resistance of the coating film to ethanol is. On the other hand, when a coating film is formed using a polymer fine particle dispersion, the fine particles are fused together by a water-soluble solvent and the resin chains are diffused, resulting in a strong coating film. Therefore, a certain degree of solubility in water-soluble solvents is also required. Then, it is considered that by setting the SP value within the above range, the coating film diffuses to a certain extent and becomes strong in water-soluble solvents, while the coating film does not swell easily with solvents such as ethanol, and the solvent resistance can be improved.

Note here that the SP value of the side chain moiety is preferably 8.0 or more, more preferably 8.5 or more, and further preferably 9.5 or more. The side chain moiety SP value is preferably 11.0 or less, more preferably 10.5 or less, and further preferably 10.0 or less. This makes it possible to increase the solvent resistance of the resulting recorded product (among them, to increase the ethanol resistance property). The side chain moiety SP value is preferably 8.0 or more and 11.0 or less, more preferably 8.5 or more and 10.5 or less, and further preferably 9.5 or more and 10.0 or less.

Furthermore, also in these monomers A, when the molar volume of the "-R2" moiety of the structural moiety of the formula (1) is defined as the molar volume of the side chain moiety, the molar volume of the side chain moiety is not particularly limited, but is preferably 170 or less. Herein, the molar volume of the side chain moiety means the molar volume of the "-R2" moiety of the formula (1), and means a value obtained by decomposing the constituent functional groups and calculating the total value of ΔV (cm³/mol) thereof with reference to the numerical value of Fedors as in the calculation of the side chain SP value. Since the molar volume of the side chain moiety is 170 or less, the "-R2" moiety of the monomer A does not become too bulky, making it possible to form a coating film with even higher adhesion to various base materials (recording media).

Furthermore, a water/1-octanol distribution coefficient (Log P) of the monomer A is preferably 1.0 or more. When the copolymer includes, as a constituent unit, a composition having a distribution coefficient (Log P) in water/1-octanol equal to or greater than a predetermined value (that is, a monomer having relatively high hydrophobicity), the copolymer does not easily swell with a solvent such as ethanol. Therefore, when the water/1-octanol distribution coefficient (Log P) of the monomer A is within a predetermined range, it becomes possible to form a coating film of a resin composition having better solvent resistance. Furthermore, in the case where the resin according to this embodiment contains a polymer fine particle dispersion (in particular, resin emulsion) in the resin dispersion, when the "water/1-octanol distribution coefficient (Log P)" is a predetermined value or more, the monomer can be efficiently reacted in the polymer fine particle dispersion (special micelles), and the content of the unreacted monomer can be reduced. Furthermore, in the case where the "water/1-octanol distribution coefficient (Log P)" is a predetermined value or less, hydrophobicity of the monomer A can be reduced, so that the radicals derived from the polymerization initiator is easily taken into the polymer fine particle dispersion (special micelles), efficient reaction becomes possible, and the content of the unreacted monomer can be reduced.

Note here that distribution coefficient (Log P) of the monomer A in the water/1-octanol is preferably 1.5 or more, more preferably 2.0 or more, and further preferably 2.5 or more. The distribution coefficient (Log P) of the monomer B in the water/1-octanol is preferably 4.8 or less, more preferably 4.0 or less, and further preferably 3.5 or less. The distribution coefficient (Log P) of the monomer A in water/1-octanol is preferably 1.5 or more and 4.8 or less, more preferably 2.0 or more and 4.0 or less, and further preferably 2.5 or more and 3.5 or less.

The homopolymer Tg of this monomer A is preferably 0°C or more, more preferably 10°C or more, and further preferably 15°C or more. By setting the Tg of the homopolymer of the monomer A to 0°C or more, the abrasion resistance of the resulting recorded product can be improved. The homopolymer Tg of this monomer A is preferably 120°C or less, more preferably 115°C or less. Thereby, even when drying at a low temperature, a film can be sufficiently formed, and the solvent resistance of the obtained recorded product can be further improved. The homopolymer Tg of the monomer A is preferably 0°C or more and 120°C or less, more preferably 10°C or more and 115°C or less, and further more preferably 15°C or more and 115°C or less.

Examples of the monomer A include cyclohexyl acrylate (side chain moiety SP value: 9.96, Log P: 2.760 ± 0.226, Tg: 19°C, molar volume: 113.5 cm³/mol), cyclohexyl methacrylate (side chain moiety SP value: 9.96, Log P: 3.179 ± 0.252, Tg: 83°C, molar volume: 113.5 cm³/mol), phenyl acrylate (side chain moiety SP value: 10.75, Log P: 1.940 ± 0.404, Tg: 57°C, molar volume: 105.4 cm³/mol), phenyl methacrylate (side chain moiety SP value: 10.75, Log P: 2.359 ± 0.429, Tg: 110 °C, molar volume: 105.4 cm³/mol), benzyl acrylate (side chain moiety SP value: 10.49, Log P: 2.109 ± 0.230, Tg: 6°C, molar volume: 121.5 cm³/mol), benzyl methacrylate (side chain moiety SP value: 10.49, Log P: 2.527 ± 0.255, Tg: 54°C, molar volume: 121.5 cm³/mol), isobornyl acrylate (side chain moiety SP Value: 9.42, Log P: 4.029 ± 0.273, Tg: 97°C, molar volume: 158.4 cm³/mol), isobornyl methacrylate (side chain moiety SP value: 9.42, Log P: 4.447 ± 0.301, Tg: 180°C, molar volume: 158.4 cm³/mol), phenoxyethyl acrylate (side chain moiety SP value: 10.42, Log P: 2.371 ± 0.246, Tg: -22°C, molar volume: 141.4 cm³/mol), phenoxyethyl methacrylate (side chain moiety SP value: 10.42, Log P: 2.790 ± 0.268, Tg: -3°C, molar volume: 141.4 cm³/mol), dicyclopentanyl acrylate (side chain moiety SP value: 10.31, Log P: 3.957 ± 0.244, Tg: 120°C, molar volume: 141.5 cm³ /mol), dicyclopenta Nil methacrylate (side chain moiety SP value: 10.31, Log P: 4.375 ± 0.266, Tg: 175°C, molar volume: 141.5 cm 3 /mol), styrene (side chain moiety SP value: 9.50, Log P: 2.821 ± 0.191, Tg: 100°C, molar volume: 87.4 cm³/mol), 4-acryloylmorpholine (side chain moiety SP value: 12.95, Log P: -0.689 ± 0 .441, Tg: 145°C, molar volume: 76.5cm³/mol), tetrahydrofurfuryl methacrylate (side chain moiety SP value: 10.37, Log P: 1.399 ± 0.340, Tg: 60°C, molar volume: 101.2 cm³/mol), cyclic trimethylolpropane formal acrylate (side chain moiety SP value: 9.96, Log P: 1.032 ± 0.361, Tg: 27°C), n-butylcyclohexyl acrylate (side chain moiety SP value: 9.35, Log P: 5.243 ± 0.255), 3,3,5-trimethylcyclohexyl acrylate (side chain moiety SP value: 9.12, Log P: 4.212 ± 0.254, Tg: 52°C, molar volume: 161.6 cm³/mol), 4-tert-butylcyclohexyl acrylate (side chain moiety SP value: 9.08, Log P: 4.570 ± 0.243, Tg: 81°C, molar volume: 177.7 cm³/mol), 4-chlorophenylacrylate (side chain moiety SP value: 11.63, Log P: 2.743 ± 0.418, Tg; 60°C), hydroxycyclohexyl methacrylate (side chain moiety SP value : 13.02, Log P: 1.230 ± 0.281, Tg: 93°C, molar volume: 106.4 cm³/mol), cyclooctyl methacrylate (side chain moiety SP value: 9.67, Log P: 4.233 ± 0.253), cycloheptyl methacrylate (side chain moiety SP value: 9.80, Log P: 3.706 ± 0.252), naphthalenyl methacrylate (side chain moiety SP value: 9.86, Log P: 4.831 ± 0.260, Tg: 143°C), cyclopentyl methacrylate (side chain moiety SP value: 10.18, Log P: 2.652 ± 0.252), cyclobutyl methacrylate (side chain moiety SP value: 10.63, Log P :2.125 ± 0.252), cyclopropyl methacrylate (side chain moiety SP value: 11.07, Log P: 1.598 ± 0.252), tert-butylcyclohexyl methacrylate (side chain moiety SP value: 9.08), Log P: 4.570 ± 0.243, Tg: 81°C) Vinyl cyclohexane (side chain moiety SP value: 8.54, Log P: 3.799 ± 0.193, Tg: 134°C), tert-butyl-4-ethynylcyclohexane (side chain moiety SP: 8.04, Log P: 5.609 ± 0.219), and the like. Among them, the monomer A is preferably an acrylate monomer or a methacrylate monomer. These monomers A may be used alone, or a plurality of the monomers A may be used in combination. The "side chain moiety SP value" in the parentheses means the SP value calculated for the chemical structure moiety defined by R₂ in the formula (1), and "Log P" in the parentheses means a water/1-octanol distribution coefficient (Log P), and "Tg" in the parentheses means the Tg of the homopolymer of that monomer.

Note here that the monomer A may include a monomer having two or more ethylenically unsaturated bonds, but the monomer A preferably includes only a monomer having one ethylenically unsaturated bond. As a result, the hardness and brittleness of the coating film due to the increase in crosslinking points of the resin can be alleviated, and the solvent resistance and stretchability of the resulting recorded product can be further improved.

The content of the monomer A as a constituent monomer is not particularly limited, but the lower limit of the content of the monomer A is preferably 50% by mass or more, more preferably 60% by mass or more, and further preferably 80% by mass or more with respect to the total amount of the copolymer. As a result, the content of the monomer A having a ring structure increases, so the film-forming property of the resin composition is improved more effectively, and a coating film of the resin composition having better solvent resistance can be formed.

### (Monomer B)

The monomer B is a monomer having an acidic group or a basic group. When a monomer having an acidic group or a basic group is included, the resin composition can have high storage stability. In particular, when the monomer is dispersed as a polymer fine particle dispersion in a resin dispersion or a resin composition, the dispersion stability of the polymer fine particle dispersion is improved by imparting electrostatic repulsion to the polymer fine particle dispersion, and the dispersion stability of the resin can be improved. Note here that the acidic group or basic group of the monomer B may be left as it is or may be neutralized to form a neutralized salt.

The acidic group included in the monomer B is preferably a carboxyl group, a sulfone group, a phosphoric acidic group, and the like. Among them, a carboxyl group is preferable.

Examples of the basic group included in the monomer B include amino groups (-NH₂, -NHR, -NRR'), and the like. Among them, a tertiary amino group (-NRR') is preferable.

Specific examples of the monomer B include acrylic acid, methacrylic acid, 2-acryloyloxyethylsuccinic acid, mono-2-(methacryloyloxy)ethyl phthalate, monohydroxyethyl acrylate phthalate, ω-carboxy-polycaprolactone (n≈2) monoacrylate, 4-carboxystyrene, 6-acrylamidohexanoic acid, 2-(dimethylamino)ethyl methacrylate, 2-(dimethylamino)ethyl acrylate, dimethylaminopropylacrylamide, 2-aminoethyl methacrylate, 2-aminoethylmethacrylamide, N-(3-aminopropyl)methacrylamide, 2-(diisopropylamino)ethyl methacrylate, N-(2-dimethylaminoethyl)methacrylamide, and the like. These monomers B may be used alone, or a plurality of the monomers B may be used in combination. Note that these monomers B may be used as they are or in the form of a neutralized salt.

The content of the monomer B as a constituent monomer is not particularly limited, but the lower limit of the content of the monomer B is preferably 0.1% by mass or more, more preferably 0.5% by mass or more, and further more preferably 1.0% by mass or more with respect to the total amount of the copolymer. As a result, the storage stability of a resin dispersion or a resin composition containing this copolymer can be improved more efficiently.

The upper limit of the content of the monomer B is preferably 20.0% by mass or less, more preferably 15.0% by mass or less, and further more preferably 10.0% by mass or less with respect to the total amount of the copolymer. This makes it possible to relatively increase the content of the monomer A in the copolymer, and as a result, a coating film of a resin composition having better solvent resistance can be formed.

The content range of the monomer B is preferably 0.1% by mass or more and 20.0% by mass or less, more preferably 0.5% by mass or more and 15.0% by mass or less, and further more preferably 1.0% by mass or more and 10.0% by mass or less with respect to the total amount of the copolymer.

### (Other monomers)

The copolymer included in the resin composition according to this embodiment may or may not contain other monomers different from a monomer A and a monomer B as constituent units. Examples of the other monomers include methyl (meth)acrylate, butyl (meth)acrylate, 2-ethylhexyl (meth)acrylate, ethyl (meth)acrylate, isobutyl (meth)acrylate, tert-butyl (meth)acrylate, isodecyl (meth)acrylate, trifluoroethyl (meth)acrylate), dimethylacrylamide, diethylacrylamide, hydroxyethylacrylamide, isopropylacrylamide, and the like. These other monomers may be used alone, or a plurality of the monomers may be used in combination.

For example, by adding a compound having a functional group that can react with the carbonyl group as a crosslinking agent to a polymer including a monomer including a carbonyl group as a constituent unit in the resin structure, a crosslinked structure can be introduced into the resin including the polymer. Therefore, by using a resin composition containing a polymer including such a monomer including a carbonyl group as a constitutional unit, the abrasion resistance of the resulting coating film can be improved.

Among such carbonyl group-containing monomers, examples of the carbonyl group-containing monofunctional ethylenically unsaturated monomers include, for example, 2-(acryloylamino)-2-methyl-4-pentanone (side chain moiety SP value: 12 .04, Log P: 0.037±0.287), acrylaldehyde (side chain moiety SP value: 15.47, Log P: 0.263±0.283), N-ethenylformamide (side chain moiety SP value: 19.72, Log P: 0.525±0.215), methyl ethenyl ketone (side chain moiety SP value: 10.91, Log P: 0.142±0.249), ethyl ethenyl ketone (side chain moiety SP Value: 10.34, Log P: 0.652 ± 0.249), 2-(acetoacetyloxy)ethyl acrylate (side chain moiety SP value: 11.73, Log P: 0.331 ± 0.356), methacrylic 2-(acetoacetyloxy)ethyl acid (side chain moiety SP value: 11.73, Log P: 0.750 ± 0.385), 2-(acetoacetyloxy)propyl acrylate (side chain moiety SP value: 11. 43, Log P: 0.635 ± 0.350), 2-(acetoacetyloxy)propyl acrylate (side chain moiety SP value: 11.43, Log P: 1.054 ± 0.378), and the like. However, these monomers have a "water/1-octanol distribution coefficient (Log P)" of 0 to 1.1 and are relatively highly hydrophilic monomers. In this way, when the resin composition contains a polymer containing a monomer including a carbonyl group as a constitutional unit is used, the solvent resistance of the resulting coating film tends to be relatively reduced. Therefore, the resin according to this embodiment may contain a polymer including a monomer including a carbonyl group as a constituent unit, but a polymer including a monomer including a carbonyl group as a constitutional unit preferably be not contained unless in particular, a crosslinking agent is added to introduce a crosslinking structure into a resin including the polymer.

Note that the other monomers may include a monomer having two or more ethylenically unsaturated bonds, but it is preferable that the other monomers include only a monomer having one ethylenically unsaturated bond. As a result, the hardness and brittleness of the coating film due to the increase in crosslinking points of the resin can be alleviated, and the solvent resistance and stretchability of the resulting recorded product can be further improved.

The content of the other monomers is not particularly limited, but the upper limit of the content of the other monomers is preferably 45% by mass or less, preferably 35% by mass or less, and further preferably 20% by mass or less with respect to the total amount of the copolymer.

### [Copolymer]

The resin according to this embodiment contains a copolymer including a monomer A and a monomer B as constitutional units. Even if such a copolymer is contained in a resin composition, the storage stability is high, and when the copolymer is contained in the resin composition, a coating film of the resin composition with solvent resistance can be formed on the coating surface.

Although this polymer may be dissolved in a resin composition or a resin dispersion, it is preferable that at least a part thereof is contained as a polymer fine particle dispersion. The polymer fine particle dispersion is a resin having dispersibility, and the examples thereof include a resin emulsion in which the resin is dispersed as fine resin particles in a resin composition by electrostatic repulsion or a colloidal dispersion containing a partially dissolved resin. When a polymer fine particle dispersion is contained as a binder resin, preferable dispersion stability, ejection stability, and the like, can be obtained.

This copolymer can be obtained by using conventionally known radical polymerization methods such as an emulsion polymerization method and a suspension polymerization method using monomers. Especially, this copolymer is preferably an emulsion polymer.

When a copolymer is obtained by polymerizing monomers by an emulsion polymerization method, other components such as an emulsifier, a polymerization initiator, a polymerization modifier, a crosslinking agent, a neutralizing agent, and a film forming aid may be appropriately used.

When a copolymer is obtained by polymerizing monomers by an emulsion polymerization method, examples of the method include a method of mixing each component and raising the temperature, or a method of mixing a part of each component, raising the temperature, polymerizing, and then adding the remaining monomer components and polymerizing thereof, and a method of mixing and heating components other than the monomers, then adding monomer components thereto, and polymerizing thereof.

Examples of the emulsifiers include anionic, cationic, and nonionic surfactants. Among them, it is preferable to use a non-reactive emulsifier that does not have multiple bonds in its structure (that is, the resin contained as a polymer fine particle dispersion includes a non-reactive emulsifier). By dispersing the copolymer obtained using a non-reactive emulsifier into a resin composition or a resin dispersion as a polymer fine particle dispersion, the dispersion stability of the copolymer can be improved, and as a result, storage stability can be further improved.

Examples of non-reactive emulsifiers include sodium alkyl sulfates such as sodium dodecylbenzenesulfonate, sodium lauryl sulfate, and sodium tetradecyl sulfate, ammonium lauryl sulfate, sodium diphenyl ether sulfonate, polyoxyethylene alkyl ether, and polyoxyethylene fatty acid ester, and the like. Specific examples include commercially available products such as "Adeka Pluronic L-31", "Adeka Pluronic P-85", "Adeka Pluronic F-108", "Adekatol LB-83", "Adekatol SO-145", "Adeka Hope YES-25", "Adekamin 4MAC-30", "Adekamin 4MT-50", "Adekacol TS-230E", "Adekacol PS-810E" [all of the above are manufactured by Adeka Corporation], "Emulgen 120", "Emulgen 147", "Emulgen 109P", "Emulgen 210P", "Emulgen 306P", "Emulgen 409PV", "Emulgen 420", "Emulgen 709", "Emulgen 1108", "Emulgen 1118S-70", "Emulgen 1150S-60", "Emulgen 1135S-70", "Emulgen 4085", "Emulgen 2020G-HA", "Emulgen A-60", "Emulgen A-90", "Emulgen A-500", "Emulgen LS-110", "Emulgen G2E-4", "Emar 2FG", "Emar 20CM", "Emar 270J", "Latemul AD-25", "Latemul E-1000A", "Acetamine 24", "Cortamine 60W", "Sanisol C", "Emanon 1112" [all of the above are manufactured by Kao Corporation], and the like. These may be used alone or in combination of two or more.

Specific examples of the reactive emulsifiers include "ADEKA REASOAP SE-20N", "ADEKA REASOAP SE-10N", "ADEKA REASOAP PP-70", "ADEKA REASOAP PP-710", "ADEKA REASOAP SR-10" and "ADEKA REASOAP SR-20" [manufactured by ADEKA Corporation], "ELEMINOL JS-2" and "ELEMINOL RS-30" [manufactured by Sanyo Chemical Industries Ltd.], "Latemul S-180A", "Latemul S-180", and "Latemul PD-104" [manufactured by Kao Corporation], "AQUARON BC-05", "AQUARON BC-10", "AQUARON BC-20", "AQUARON HS-05", "AQUARON HS-10", "AQUARON HS-20", "NEW FRONTIER S-510", "AQUARON KH-05", and "AQUARON KH-10" [manufactured by Dai-Ichi Kogyo Seiyaku Co., Ltd.], "PHOSPHINOL TX" [manufactured by Toho Chemical Industry Co., Ltd.], "ADEKA REASOAP NE-10", "ADEKA REASOAP NE-20", "ADEKA REASOAP NE-30", "ADEKA REASOAP NE-40", "ADEKA REASOAP ER-10", "ADEKA REASOAP ER-20", "ADEKA REASOAP ER-30", "ADEKA REASOAP ER-40" [manufactured by ADEKA Corporation], "AQUARON RN-10", "AQUARON RN-20", "AQUARON RN-30", and "AQUARON RN-50" [manufactured by Dai-Ichi Kogyo Seiyaku Co., Ltd.], and the like.

The amount of the emulsifier to be used may be adjusted appropriately, but it is preferably 0.1 parts by mass or more, more preferably 0.5 parts by mass or more, and further preferably 1 part by mass or more, in terms of solid content with respect to 100 parts by mass of the monomer. The amount of the emulsifier to be used is preferably 20 parts by mass or less, more preferably 15 parts by mass or less, and further more preferably 10 parts by mass or less, in terms of solid content with respect to 100 parts by mass of the monomer. The amount of the emulsifier to be used is preferably 0.1 parts by mass or more and 20 parts by mass or less, more preferably 0.5 parts by mass or more and 15 parts by mass or less, and further more preferably 1 part by mass or more and 10 parts by mass or less, in terms of solid content with respect to 100 parts by mass of the monomer.

Examples of the polymerization initiator include organic peroxides such as alkyl peroxides, t-butyl hydroperoxide, cumene hydroperoxide, p-methane hydroperoxide, lauroyl peroxide, 3,5,5-trimethyl hexanoyl peroxide, octanoyl peroxide, t-butyl cumyl peroxide, benzoyl peroxide, dichlorobenzoylperoxide, dicumyl peroxide, di-t-butyl peroxide, 1,1-bis(t-butylperoxy)-3,3,5-trimethylcyclohexane, 3,3,5-trimethylcyclohexanone peroxide, methylcyclohexanone peroxide, diisobutyl peroxydicarbonate, di-2-ethylhexyl peroxydicarbonate and t-butyl peroxyisobutyrate; 2,2'-azobisisobutyronitrile, dimethyl-2,2'-azobisisobutyrate, 2,2'-azobis(2,4-dimethylvaleronitrile), 2,2'-azobis(2-methylbutyronitrile), potassium persulfate, sodium persulfate, ammonium persulfate, hydrogen peroxide, ammonium (amine) salts of 4,4'-azobis-4-cyanovaleric acid, 2,2'-azobis(2-methylamidoxime) dihydrochloride, 2,2'-azobis(2-methylbutaneamidoxime) dihydrochloride tetrahydrate, 2,2'-azobis{2-methyl-N-[1,1-bis(hydroxymethyl)-2-hydroxyethyl]-propionamide}, 2,2'-azobis[2-methyl-N-(2-hydroxyethyl)-propionamid], and various redox catalysts (including oxidizing agents such as ammonium persulfate, potassium persulfate, sodium persulfate, hydrogen peroxide, t-butyl hydroperoxide, benzoyl peroxide, cumene hydroperoxide and p-methane hydroperoxide, and reducing agents such as sodium sulfite, acidic sodium sulfite, rongalite, and ascorbic acid), and the like. These polymerization initiators may be used either alone or in combination of two types or more.

The amount of the polymerization initiator to be used may be adjusted appropriately, but is preferably 0.01 parts by mass or more, more preferably 0.03 parts by mass or more, and further preferably 0.05 parts by mass or more, with respect to 100 parts by mass of the monomer. The amount of the polymerization initiator to be used is preferably 5 parts by mass or less, more preferably 3 parts by mass or less, and further preferably 1 part by mass or less, with respect to 100 parts by mass of the monomer. The amount of the polymerization initiator to be used is preferably 0.01 parts by mass or more and 5 parts by mass or less, more preferably 0.03 parts by mass or more and 3 parts by mass or less, and further preferably 0.05 parts by mass or more and 1 part by mass or less with respect to 100 parts by mass of the monomer.

Examples of the polymerization regulator include alcohols such as methanol, ethanol, propanol and butanol, aldehydes such as acetaldehyde, propionaldehyde, n-butyl aldehyde, furfural and benzaldehyde, and mercaptans such as n-dodecylmercaptan, thioglycolic acid, octyl thioglycolate and thioglycerol. These may be used alone or in combination of two types of more thereof.

The amount of the polymerization regulator to be used may be adjusted appropriately, but is preferably 0.01 parts by mass or more, more preferably 0.05 parts by mass or more, and further preferably 0.1 parts by mass or more with respect to 100 parts by mass of the monomer. The amount of the polymerization regulator to be used is preferably 10 parts by mass or less, more preferably 5 parts by mass or less, and further preferably 3 parts by mass or less with respect to 100 parts by mass of the monomer. The amount of the polymerization regulator to be used is preferably 0.01 parts by mass or more and 10 parts by mass or less, more preferably 0.05 parts by mass or more and 5 parts by mass or less, and further preferably 0.1 parts by mass or more and 3 parts by mass or less with respect to 100 parts by mass of the monomer.

Although a crosslinking agent may be used, it is preferable that a crosslinking agent is not used (that is, the resin does not contain a crosslinking agent). By incorporating a copolymer that does not contain a crosslinking agent into a resin composition or a resin dispersion, storage stability can be improved.

When a crosslinking agent is contained, examples of plasticizers include aliphatic dihydrazides such as oxalic acid dihydrazide, malonic acid dihydrazide, succinic acid dihydrazide, glutaric acid dihydrazide, adipic acid dihydrazide, and sebacic acid dihydrazide, carbonic polyhydrazide, aliphatic, alicyclic, aromatic bissemicarbazide, aromatic dicarboxylic acid dihydrazide, polyacrylic acid polyhydrazide, aromatic hydrocarbon dihydrazide, hydrazine-pyridine derivative, and unsaturated dicarboxylic acid dihydrazide such as maleic acid dihydrazide.

The neutralizing agent is used, for example, to neutralize acidic groups or basic groups derived from the monomer B. When the copolymer includes the monomer B having an acidic group or a basic group as a constituent unit, by neutralizing the acidic group or the basic group derived from the monomer B (that is, when the copolymer includes a monomer B having a neutralized acidic group or a neutralized basic group as a constituent unit), a resin composition that more effectively exhibits the effects of the present invention can be obtained.

Examples of acids that neutralize the basic groups derived from the monomer B include inorganic acids such as hydrochloric acid, nitric acid, phosphoric acid, and sulfuric acid, and organic acids such as formic acid, acetic acid, propionic acid, benzoic acid, succinic acid, butyric acid, fumaric acid, and paratoluene sulfonic acid, citric acid, and oxalic acid. Among them, benzoic acid is preferably used from the viewpoint of solvent resistance during low temperature drying.

Bases that neutralize the acidic groups derived from the monomer B include inorganic bases such as alkali metal hydroxides, alkaline earth metal hydroxides, alkali metal carbonates, and alkaline earth metal carbonates, ammonia, and methylamine, ethylamine, propylamine, butylamine, hexylamine, octylamine, ethanolamine, isopropylamine, propanolamine, 2-methyl-2-aminopropanol, diethanolamine, N,N-dimethylethanolamine, N-methyldiethanolamine, dimethylamine, triethylamine dibutylamine, N,N-diethylethanolamine, N,N-dibutylaminoethanol, N-(β-aminoethyl)ethanolamine, N-methylethanolamine, 2-ethylaminoethanol, mono-n-butylethanolamine, mono-n-butyldiethanolamine, n-tert-butyldiethanolamine, 3-methyl-2-oxazolidinone, n-(2-hydroxyethyl)morpholine, aminomethylpropanediol, aminoethylpropanediol, 2-(dimethylaminomethyl)-2-propanol, tri(hydroxymethyl)aminomethane, DL-2-amino-1-butanol, 3-amino-4-octanol, triethanolamine, tris(2-hydroxyethyl)amine, and other amines. Among them, ammonia and N,N-dimethylethanolamine are preferably used from the viewpoint of solvent resistance during low temperature drying.

In the resin according to this embodiment, the Tg of the resin can be controlled by appropriately changing the types and contents of at least two types of monomers, such as the monomer A and the monomer B, including a copolymer including the monomer A and the monomer B obtained in this way as constituent units.

The Tg of the resin containing this copolymer is preferably 0°C or more and 120°C or less. When the Tg of the resin is 0°C or higher, the abrasion resistance of the resulting recorded product is improved. When the Tg of the resin is 120°C or less, the film forming properties of the resin composition are improved even in the case of drying at low temperatures, and a coating film of the resin composition having solvent resistance can be formed. Furthermore, the stretchability of the coating film of the resin composition can be improved.

Note that the Tg of the resin containing this copolymer is more preferably 20°C or more, further more preferably 30°C or more, and even more preferably 40°C or more. The Tg of the resin containing this copolymer is more preferably 100°C or less, further more preferably 90°C or less, and even more preferably 80°C or less. The Tg of the resin containing this copolymer is preferably 0°C or more and 120°C or less, more preferably 20°C or more and 100°C or less, further preferably 30°C or more and 90°C or less, and even more preferably 40°C or more and 80°C or less.

Furthermore, it is preferable to minimize the content of unreacted monomers derived from this copolymer as possible. Unreacted monomers derived from the copolymer may cause the coating film of the resin composition to become relatively tacky. By reducing the content of unreacted monomers derived from the copolymer, blocking resistance is improved, resulting in a resin composition that more effectively exhibits the effects of the present invention.

Specifically, the content of unreacted monomers derived from the copolymer is preferably 0.15% by mass or less, more preferably 0.1% by mass or less, and further more preferably 0.08% by mass or less with respect to the total amount of the resin (in the total amount of the resin dispersion). A recorded product obtained using a resin composition containing such a copolymer improves blocking resistance.

Note that the content of unreacted monomers derived from the copolymer can be controlled by selecting a monomer A having a distribution coefficient (Log P) in water/1-octanol being within a predetermined range.

The arrangement of monomers included in a copolymer including the monomer A and the monomer B as constituent units may be a random copolymer with no order in the arrangement of monomers, a block copolymer in which monomers of the same type are long and continuous, or a graft copolymer in which monomers are arranged in a branched manner, but a random copolymer is preferable. By dispersing a random copolymer including the monomer A and the monomer B as constituent units as a polymer fine particle dispersion, the dispersion stability of the copolymer can be improved. For example, when this copolymer is contained in a resin composition and the resin composition is ejected onto the surface of the base material by an inkjet method, ejection stability can be improved.

The type of resin including a copolymer including the monomer A and the monomer B as constituent units is not particularly limited, and examples thereof include one or more resins or copolymer resins selected from the group consisting of acrylic resin (including copolymers such as styrene-acrylic resin), polyurethane resin, polyester resin, vinyl chloride resin, vinyl acetate resin, polyether resin, vinyl chloride vinyl acetate copolymer resin, polyethylene resin, acrylamide resin, epoxy resin, polycarbonate resin, silicone resin, and polystyrene resin, or a mixture thereof. Among them, those containing acrylic resin are preferred.

When the resin is contained as a polymer fine particle dispersion, the average particle diameter of the polymer fine particle dispersion is preferably 10 nm or more, more preferably 20 nm or more, and further more preferably 30 nm or more from the viewpoint of dispersion stability in the resin composition. The average particle diameter of the polymer fine particle dispersion is preferably 500 nm or less, more preferably 350 nm or less, and further more preferably 200 nm or less from the viewpoint of dispersion stability in the resin composition and film formation property. The average particle diameter of the polymer fine particle dispersion is preferably 10 nm or more and 500 nm or less, more preferably 20 nm or more and 350 nm or less, and further more preferably 30 nm or more and 200 nm or less. Note here that the average particle diameter of the polymer fine particle dispersion can be measured using a concentrated particle size analyzer (manufactured by Otsuka Electronics Co., Ltd., model: FPAR-1000) at a measurement temperature of 25°C.

The weight average molecular weight of the polymer fine particle dispersion is preferably 5000 or more, more preferably 10000 or more, and further preferably 100000 or more from the viewpoint of film water resistance and stretchability. From the viewpoint of the storage stability of the resin composition, the weight average molecular weight is preferably 2000000 or less, more preferably 1750000 or less, and further preferably 1500000 or less. The weight average molecular weight of the polymer fine particle dispersion is preferably 5000 or more and 2000000 or less, more preferably 10000 or more and 1750000 or less, and further more preferably 100000 or more and 1500000 or less. Note here that in this embodiment, the molecular weight of the resin indicates the weight average molecular weight Mw, and is a value measured by GPC (gel permeation chromatography), using "HLC-8320GPC" manufactured by Tosoh Corporation and can be measured using a polystyrene standard for calibration curves as a standard.

### <<2. Resin dispersion>>

The resin dispersion according to this embodiment is a resin dispersion containing a resin, as a polymer fine particle dispersion, containing a copolymer including the above specific monomer as a constituent unit. Note that in this description, the resin dispersion differs from the resin composition since the resin dispersion is mainly applied to the surface of the base material (recording medium) and the like, and forms layers each of which has a function such as a recording layer, a primer layer, and an overcoat layer. The resin dispersion according to this embodiment is used for producing a resin composition for forming a coating film having a desired function, and a resin containing a copolymer including the above specific monomer as a constituent unit is dispersed in a liquid dispersion medium such as water as a polymer fine particle dispersion. For example, a resin composition can be produced by mixing the resin dispersion according to this embodiment with other components included in the resin composition (for example, a coloring material, a cationic compound, a leveling agent, and the like).

Thus, when a resin composition is produced by dispersing a copolymer including the above-mentioned specific monomer as a constituent unit in a liquid dispersion medium to form a resin dispersion, and allowing the resulting dispersion liquid to contain other components, the storage stability (dispersion stability) of the resin composition can be improved.

For example, water or water-soluble organic solvents can be used as the liquid dispersion medium. Water and water-soluble organic solvents, which are contained in the resin composition described below, can be used.

### <<3. Resin composition>>

The resin composition according to this embodiment contains the above resin dispersion. This resin composition has high storage stability because the resin composition contains a copolymer including the above-mentioned specific monomer as a constituent unit. Furthermore, by applying this resin composition to the surface of a base material (recording medium), a recorded product, and the like, a coating film of the resin composition having solvent resistance can be formed. Note here that in this description, the "resin composition" means a composition containing a resin or a resin dispersion (also referred to as a resin-containing composition or a resin-containing ink composition), and a composition that is in a liquid state (ink state) by including water or a water-soluble solvent described later as optional components.

Note here that the resin composition according to this embodiment may be a coloring ink containing a coloring material. In this description, the term "coloring material" includes dyes and pigments, and include dyes or pigments included in coloring inks that form images of yellow, magenta, cyan, black, and intermediate or light colors thereof, white dyes or white pigments included in white ink, and bright pigments included in metallic ink.

This coloring ink may be a coloring ink that forms an image in yellow, magenta, cyan, black, or an intermediate color or light color thereof. Further, the coloring ink may be a white ink including a white coloring material, a metallic ink containing a bright pigment, or the like.

Furthermore, the resin composition according to this embodiment may be a receiving liquid including a cationic compound that is applied to the base material prior to applying the coloring ink to the base material. Furthermore, it may be a clear ink that does not contain a coloring material, a primer agent for forming a primer layer on the surface of a base material, and the like, or an overcoat ink for forming an overcoat layer on the surface of a recorded product, and the like, or it may be something called a paint or a coating agent.

Hereinafter, each component included in the resin composition according to this embodiment will be described. Hereinafter, specific embodiments of the present invention will be described in detail. However, the present invention is not limited to the following embodiments, and can be implemented with appropriate modifications within the scope of the purpose of the present invention.

### [Resin]

As the resin, a resin containing a copolymer including the above-mentioned specific monomer as a constituent unit can be used.

Furthermore, the resin composition according to this embodiment may further contain a resin different from the copolymer including the monomer A and the monomer B as constituent units. Specifically, the resins including one or more resins or copolymer resins selected from the group consisting of acrylic resins different from the above copolymers (including copolymers such as styrene-acrylic resins), polyurethane resins, polyester resins, vinyl chloride resins, vinyl acetate resin, polyether resin, vinyl chloride vinylacetate copolymer resin, polyethylene resin, acrylamide resin, epoxy resin, polycarbonate resin, silicone resin, and polystyrene resin, or mixtures thereof.

Examples of commercially available polymer fine particle dispersions (resin emulsions) include, but are not limited to, Acrit WEM-031U, WEM-200U, WEM-321, WEM-3000, WEM-202U, WEM-3008, (acrylic-urethane resin emulsion manufactured by Taisei Fine Chemical Co., Ltd.), Acrit UW-550CS, UW-223SX, AKW107, RKW-500 (acrylic resin emulsion manufactured by Taisei Fine Chemical Co., Ltd.), LUBRIJET N240 (acrylic resin emulsion manufactured by Lubrizol), Superflex 150, 210 , 470, 500M, 620, 650, E2000, E4800, R5002 (urethane resin emulsion manufactured by Daiichi Kogyo Seiyaku Co., Ltd.), VINYBLAN 701FE35, 701FE50, 701FE65, 700, 701, 711, 737, 747 (vinyl chloride -acrylic resin emulsion manufactured by Nissin Chemical Co., Ltd.), VINYBLAN 2706, 2685 (acrylic resin emulsion manufactured by Nissin Chemical Co., Ltd.), Movinyl 743N, 6520, 6600, 6820, 7470, 7720 (acrylic resin emulsion manufactured by Japan Coating Resin Co., Ltd.), PRIMAL AC-261P, AC-818 (acrylic resin emulsion manufactured by Dow Chemical), JE-1056 (acrylic resin emulsion manufactured by Seiko PMC), NeoCryl XK-190 (acrylic resin emulsion manufactured by DSM Coating Resin Corporation), NeoCryl A2091, A2092, A639, A655, A662 (styrene-acrylic resin emulsion manufactured by DSM Coating Resin Corporation), QE-1042, KE-1062 (styrene-acrylic resin emulsion manufactured by Seiko PMC), JONCRYL7199, PDX-7630A (styrene-acrylic resin emulsion manufactured by BASF Japan), Chaline R170BX (silicone-acrylic resin emulsion manufactured by Nissin Chemical Industry Co., Ltd.), Takelac W-6010 (urethane resin emulsion manufactured by Mitsui Chemicals), ELITEL KA-5071S (polyester manufactured by UNITIKA LTD.), Polysol AP-1350 (acrylic resin emulsion manufactured by SHOWA DENKO K.K) and the like.

The content of the resin is not particularly limited, but the lower limit of the content of the resin is preferably 0.05% by mass or more, more preferably 0.1% by mass or more, further more preferably 0.5% by mass or more, and even more preferably 1% by mass or more with respect to the total amount of the resin composition. The upper limit of the resin content is preferably 20% by mass or less, more preferably 17.5% by mass or less, and even more preferably 15% by mass or less with respect to the total amount of the resin composition. The range of the content of the resin is preferably 0.05% by mass or more and 20% by mass or less, more preferably 0.1% by mass or more and 17.5% by mass or less, further more preferably 0.5% by mass or more and 15% by mass or less, and even more preferably 1% by mass or more and 15% by mass or less with respect to the total amount of the resin composition.

### [Water]

The resin composition according to this embodiment contains water. As water, it is preferable to use deionized water rather than water containing various ions. The content of water is not particularly limited as long as it can disperse or dissolve each component, but the lower limit of the content of water is preferably within the range of 30% by mass or more, more preferably within the range of 45% by mass or more, and further more preferably within the range of 50% by mass or more, with respect to the total amount of the resin composition. The upper limit of the content of water is preferably within the range of 85% by mass or less, more preferably within the range of 80% by mass or less, and further more preferably within the range of 75% by mass or less, with respect to the total amount of the resin composition. The content of water is preferably in the range of 30% by mass or more and 85% by mass or less, more preferably 45% by mass or more and 80% by mass or less, and further more preferably 50% by mass or more and 75% by mass or less with respect to the total amount of the resin composition.

### [Water-soluble solvent]

The resin composition according to this embodiment may contain a water-soluble solvent. The solvent is one that can disperse or dissolve the coloring material and the like. Note here that in this description, "water-soluble solvent" mainly means a water-soluble organic solvent. Furthermore, the water-soluble solvent does not necessarily need to be a solvent for dissolving all of the contained components, but may be a dispersion medium for dispersing at least some of the contained components.

Examples of the water-soluble solvent includes alkyl alcohols having 1 to 5 carbon atoms, such as, methyl alcohol, ethyl alcohol, n-propyl alcohol, isopropyl alcohol, n-butyl alcohol, sec-butyl alcohol, tert-butyl alcohol, isobutyl alcohol and n-pentanol; monohydric alcohols such as 3-methoxy-1-butanol, 3-methoxy-3-methyl-1-butanol, 3-methoxy-1-propanol, 1-methoxy-2-propanol, 3-methoxy-n-butanol; amides such as formamide, acetamide, propanamide, butanamide, isobutyramide, pentanamide, N-methylformamide, N-methylacetamide, N-methylpropanamide, N-methylbutanamide, N-methylisobutyramide, N-methylpentanamide, N-ethylformamide, N-ethylacetamide, N-ethylpropanamide, N-ethylbutanamide, N-ethylisobutyramide, N-ethylpentanamide, N-propylformamide, N-propylacetamide, N-propylpropanamide, N-propylbutanamide, N-propylisobutyramide, N-propylpentanamide, N-isopropylformamide, N-isopropylacetamide, N-isopropylpropanamide, N-isopropylbutanamide, N-isopropylisobutyramide, N-isopropylpentanamide, N-butylformamide, N-butylacetamide, N-butylpropanamide, N-butylbutanamide, N-butylisobutylamide, N-butylpentanamide, N,N-dimethylformamide, N,N -dimethylacetamide, N,N-dimethylpropanamide, N,N-dimethylbutanamide, N,N-dimethylisobutyramide, N,N-dimethylpentanamide, N,N-diethylformamide, N,N-diethylacetamide, N,N-diethylpropanamide, N,N-diethylbutanamide, N,N-diethylisobutyramide, N,N-diethylpentanamide, N,N-dipropylformamide, N,N-dipropylacetamide, N,N-dipropylpropanamide, N,N-dipropylbutanamide, N,N-dipropylisobutyramide, N,N-dipropylpentanamide, N,N-diisopropylformamide, N,N-diisopropylacetamide, N,N-diisopropylpropanamide, N,N-diisopropylbutanamide, N,N-diisopropylisobutyramide, N,N-diisopropylpentanamide, N,N-dibutylformamide, N,N-dibutylacetamide, N,N-dibutyl propanamide, N,N-dibutylbutanamide, N,N-dibutylisobutyramide, N,N-dibutylpentanamide, N-ethyl-N-methylformamide, N-ethyl-N-methylacetamide, N-ethyl-N- methylpropanamide, N-ethyl-N-methylbutanamide, N-ethyl-N-methylisobutyramide, N-ethyl-N-methylpentanamide, N-methyl-N-propylformamide, N-methyl-N-propylacetamide, N-methyl-N-propylpropanamide, N-methyl-N-propylbutanamide, N-methyl-N-propylisobutyramide, N-methyl-N-propylpentanamide, N-ethyl-N-propylformamide, N-methyl-N-(1-methylethyl)formamide, N-hydroxypropyl-N-methylacetamide, N-ethyl-N-propylacetamide, N-ethyl-N-propylpropanamide, N-ethyl-N-propylbutanamide, N-ethyl-N-propylisobutyramide, N-ethyl-N-propylpentanamide, 3-methyl-2-oxazolidinone, 3-ethyl-2-oxazolidinone, N-vinylmethyloxazolidinone, 3-methoxy-N,N-dimethylpropanamide, 3-butoxy-N,N-dimethylpropanamide, 3-methoxypropanamide, 3-butoxypropanamide, N,N-dibutyl-3-methoxypropanamide, N,N-dibutyl-3-butoxypropanamide, and N,N-dimethyl-3-butoxypropanamide; ketones or keto alcohols such as acetone, diacetone alcohol, and texanol; ethers such as tetrahydrofuran, dioxane (including 1,4-dioxane, and the like)); oxyethylene or oxypropylene copolymers such as polyethylene glycol and polypropylene glycol; diols such as ethylene glycol, propylene glycol, diethylene glycol, dipropylene glycol, 1,2-propanediol, 1,3-propanediol, isobutylene glycol , triethylene glycol, tripropylene glycol, tetraethylene glycol, 1,3-propanediol, 2-methyl-1,2-propanediol, 2-methyl-1,2-propanediol, 1,2-butanediol, 1,3-butanediol, 1,4-butanediol, 1,2-pentanediol, 1,3-pentanediol, 1,2-hexanediol, 1,5-pentanediol, 1,6-hexanediol, 2-methyl-2,4-pentanediol, 3-methyl-1,3-butanediol, 3-methyl-1,5-pentanediol, 2-methyl-2,4-pentanediol; triols such as glycerin, trimethylol ethane, trimethylolpropane, and 1,2,6-hexanetriol; tetrahydric alcohols such as mesoerythritol and pentaerythritol; monoalkyl ethers such as ethylene glycol monomethyl (or ethyl, isopropyl, n-butyl, isobutyl, n-hexyl, 2-ethylhexyl) ether, diethylene glycol monomethyl (or ethyl, isopropyl, n-butyl, isobutyl, n-hexyl, 2-ethylhexyl) ether, triethylene glycol monomethyl (or ethyl, propyl, isopropyl, n-butyl, isobutyl, t-butyl, pentyl, n-hexyl, 2-ethylhexyl) ether, propylene glycol monomethyl (or ethyl, propyl, isopropyl, n-butyl, isobutyl, t-butyl, pentyl, n-hexyl, 2-ethylhexyl) ether, dipropylene glycol monomethyl (or ethyl, propyl, isopropyl, n-butyl, isobutyl, t-butyl, pentyl, n-hexyl, 2-ethylhexyl) ether, tripropylene glycol monomethyl (or ethyl, propyl, isopropyl, n-butyl, isobutyl, t-butyl, pentyl, n-hexyl, 2-ethylhexyl) ether, and tetraethylene glycol monomethyl (or ethyl, propyl, isopropyl, n-butyl, isobutyl, t-butyl, pentyl, n-hexyl, 2-ethylhexyl) ether; dialkyl ethers of polyhydric alcohols, such as diethylene glycol dimethyl ether, diethylene glycol diethyl ether, diethylene glycol ethyl methyl ether, triethylene glycol dimethyl ether, triethylene glycol diethyl ether, triethylene glycol ethyl methyl ether, tetraethylene glycol dimethyl ether, tetraethylene glycol diethyl ether, tetraethylene glycol ethyl methyl ether, propylene glycol dimethyl ether, propylene glycol diethyl ether, propylene glycol ethyl methyl ether, dipropylene glycol dimethyl ether, dipropylene glycol diethyl ether, dipropylene glycol ethyl methyl ether, tripropylene glycol dimethyl ether, tripropylene glycol diethyl ether, tripropylene glycol ethyl methyl ether; acetates such as ethylene glycol monomethyl (or ethyl, propyl, isopropyl, n-butyl, isobutyl, t-butyl, pentyl, n-hexyl, 2-ethylhexyl) ether acetate, diethylene glycol monomethyl (or ethyl, propyl, isopropyl, n-butyl, isobutyl, t-butyl, pentyl, n-hexyl, 2-ethylhexyl) ether acetate, triethylene glycol monomethyl (or ethyl, propyl, isopropyl, n-butyl, isobutyl, t-butyl, pentyl, n-hexyl, 2-ethylhexyl) ether acetate, propylene glycol monomethyl (or ethyl, propyl, isopropyl, n-butyl, isobutyl, t-butyl, pentyl, n-hexyl, 2-ethylhexyl) ether acetate, dipropylene glycol monomethyl (or ethyl, propyl, isopropyl, n-butyl, isobutyl, t-butyl, pentyl, n-hexyl, 2-ethylhexyl) ether acetate, tripropylene glycol monomethyl (or ethyl, propyl, isopropyl, n-butyl, isobutyl, t-butyl, pentyl, n-hexyl, 2-ethylhexyl) ether acetate, ethylene glycol diacetate, diethylene glycol diacetate, propylene glycol diacetate, dipropylene glycol diacetate; lactones such as γ-butyrolactone, α-methylene-γ-butyrolactone, ε-caprolactone, γ-valerolactone, γ-hexanolactone, γ-heptanolactone, δ-valerolactone, δ-hexanolactone, δ-heptalactone, δ-octalactone, δ-nonalactone , δ-decalactone, δ-undecalactone, γ,γ-dimethyl-γ-butyrolactone, α-methyl-γ-butyrolactone, γ-crotolactone, α-methylene-γ-butyrolactone, β-methyl-γ-butyrolactone, and 6-methylvalerolactone, carbonate esters such as 2,3-butylene carbonate, ethylene carbonate, and propylene carbonate, acetate esters such as methyl acetate, ethyl acetate, n-propyl acetate, isopropyl acetate, n-butyl acetate, isobutyl acetate, hexyl acetate, and octyl acetate, lactate esters such as methyl lactate, ethyl lactate, butyl lactate, propyl lactate, ethylhexyl lactate, amyl lactate, and isoamyl lactate, dibasic acid esters such as dimethyl oxalate, diethyl oxalate, dimethyl malonate, diethyl malonate, dipropyl malonate, dimethyl succinate, diethyl succinate, dimethyl glutarate, and diethyl glutarate, alkanolamines such as monoethanolamine, diethanolamine, triethanolamine, N-methylethanolamine, N-ethylethanolamine, N-butylethanolamine, N-methyldiethanolamine, N-ethyldiethanolamine, and N-butyldiethanolamine, saturated hydrocarbons such as n-hexane, isohexane, n-nonane, isononane, dodecane, and isododecane, unsaturated hydrocarbons such as 1-hexene, 1-heptene, and 1-octene, cyclic saturated hydrocarbons such as cyclohexane, cycloheptane, cyclooctane, cyclodecane, and decalin, cyclounsaturated hydrocarbons such as cyclohexene, cycloheptene, cyclooctene, 1,1,3,5,7-cyclooctatetraene, and cyclododecene, aromatic hydrocarbons such as benzene, toluene, and xylene; nitrogen-containing heterocyclic compounds such as N-methyl-2-pyrrolidone, 2-pyrrolidone, β-lactam, δ-lactam, ε-caprolactam, N-methyl-epsilon-caprolactam, 2-hydroxylethylpyrrolidone, N-2-hydroxyethyl-2-pyrrolidone, 3-methyl-2-pyrrolidinone, 1,3-dimethyl-2-imidazolidinone; cyclic compounds such as sulfolane, morpholines such as N-methylmorpholine, N-ethylmorpholine, N-formylmorpholine, N-hydroxyethylmorpholine, 2-hydroxylethylmorpholine, and 4-acetylmorpholine, terpene solvents, and the like. These can be used alone or in combination of two or more. Among them, it is preferable to select a water-soluble solvent so that the resin composition has a desired static surface tension, and for example, preferably to include at least one water-soluble solvent such as an alkanediol.

The content of the water-soluble solvent is not particularly limited as long as it can disperse or dissolve each component, but the lower limit of the content of the water-soluble solvent is preferably within a range of 5% by mass or more, more preferably within a range of 10% by mass or more, and further more preferably within a range of 12% by mass or more with respect to the total amount of the resin composition. The upper limit of the content of the water-soluble solvent is preferably within the range of 50% by mass or less, more preferably within the range of 45% by mass or less, and within the range of 40% by mass or less with respect to the total amount of the resin composition. The content of the water-soluble solvent is preferably within the range of 5% by mass or more and 50% by mass or less, more preferably within the range of 10% by mass or more and 45% by mass or less, and further more preferably within the range of 12% by mass or more and 40% by mass or less with respect to the total amount of the water-based ink.

### [Color material]

The resin composition according to this embodiment may contain a coloring material. Although it is not essential for the resin composition according to this embodiment to contain a coloring material, containing of a coloring material makes it possible to make a coloring ink that forms a desired image pattern or a white ink, metallic ink, and the like that can serve as a base layer. The coloring material may be a dye or a pigment.

In the resin composition according to this embodiment, pigments that can be used are not particularly limited, and include organic pigments or inorganic pigments used in conventional resin compositions (coloring inks). These may be used alone or in combination of two or more. Note that the resin composition according to this embodiment does not need to contain a coloring material. When using a pigment in the resin composition according to this embodiment, the dispersion stability of the pigment can be improved by using a dispersant or a dispersion aid (pigment derivative). Furthermore, a pigment or a dye may be included in the resin for use.

Examples of the pigment include inorganic pigments or organic pigments conventionally used in resin compositions (coloring inks). These may be used alone or in combination of two or more. Specific examples of the organic pigments include insoluble azo pigments, soluble azo pigments, derivatives from dyes, phthalocyanine organic pigments, quinacridone organic pigments, perylene organic pigments, perinone organic pigments, azomethine organic pigments, and anthraquinone organic pigments (anthrone organic pigments), xanthene organic pigments, diketopyrrolopyrrole organic pigments, dioxazine organic pigments, nickel azo pigments, isoindolinone organic pigments, pyranthrone organic pigments, thioindigo organic pigments, condensed azo organic pigments, benzimidazolone organic pigments, quinophthalone organic pigments, isoindoline organic pigments, quinacridone solid solution pigments, perylene solid solution pigments, and other pigments such as lake pigments and carbon black.

Examples of organic pigments using color index (C.I.) numbers include C.I. Pigment Yellow 1, 2, 3, 12, 13, 14, 16, 17, 20, 24, 73, 74, 75, 83, 93, 95, 97, 98, 109, 110, 114, 117, 120, 125, 128, 129, 130, 137, 138, 139, 147, 148, 150, 151, 153, 154, 155, 166, 168, 180, 185, 213, 214, C.I. Pigment Red 5, 7, 9, 12, 48, 48:2, 48:3, 49, 52, 53, 57, 57:1, 97, 112, 122, 123, 146, 149, 150, 168, 176, 177, 180, 184, 185, 192, 202, 206, 208, 209, 213, 215, 216, 217, 220, 223, 224, 226, 227, 228, 238, 240, 254, 255, 269, 291, C.I. Pigment Orange 16, 36, 43, 51, 55, 59, 61, 64, 71, 73, C.I. Pigment Violet 19, 23, 29, 30, 37, 40, 50, C. I. Pigment Blue 15, 15:1, 15:3, 15:4, 15:6, 16, 22, 60, 64, C.I. Pigment Green 7, 36, 58, 59, 62, 63, C.I. Pigment Brown 23, 25, 26, C.I. Pigment Black 7 and the like.

In the resin composition according to this embodiment, specific examples of dyes that can be used include azo dyes, benzoquinone dyes, naphthoquinone dyes, anthraquinone dyes, cyanine dyes, squarylium dyes, croconium dyes, Merocyanine dyes, stilbene dyes, diarylmethane dyes, triarylmethane dyes, fluorane dyes, spiropyran dyes, phthalocyanine dyes, indigo dyes such as indigoid, fulgide dyes, nickel complex dyes, and azulene dyes.

Furthermore, specific examples of the inorganic pigments include titanium oxide, barium sulfate, calcium carbonate, zinc oxide, barium carbonate, silica, talc, clay, synthetic mica, alumina, zinc white, lead sulfate, yellow lead, zinc yellow, red iron oxide (red iron oxide (III)), cadmium red, ultramarine blue, navy blue, chromium oxide green, cobalt green, amber, titanium black, synthetic iron black, inorganic solid solution pigments, and the like.

The average dispersed particle diameter of the pigment is not particularly limited as long as the desired color can be produced. Although it varies depending on the type of pigment, from the viewpoint of obtaining good dispersion stability and sufficient coloring power, the lower limit of the average dispersed particle diameter of the pigment is preferably within the range of 10 nm or more, and preferably within the range of 20 nm or more, and even more preferably within the range of 30 nm or more. The upper limit of average dispersed particle diameter of the pigment is preferably within the range of 500 nm or less, more preferably within the range of 400 nm or less, and even more preferably within the range of 300 nm or less. When the average dispersed particle diameter is 500 nm or less, even when the resin composition according to this embodiment is inkjet ejected, the nozzle of the inkjet head is unlikely to be clogged, and a homogeneous image with high reproducibility can be obtained. When the average dispersed particle diameter is 10 nm or more, the light resistance of the obtained recorded product can be made good. The range of the average dispersed particle diameter of the pigment is preferably in the range of 10 nm or more and 500 nm or less, more preferably in the range of 20 nm or more and 400 nm or less, and even more preferably in the range of 30 nm or more and 350 nm or less. Note here that in this embodiment, the average dispersed particle diameter of the pigment is the average particle diameter (D50) measured at 25°C using a concentrated particle diameter analyzer (manufactured by Otsuka Electronics Co., Ltd., model: FPAR-1000). Note here that in this embodiment, "volume-based cumulative 50% particle diameter (D50)" means a particle diameter at which the cumulative volume calculated from the small diameter side is 50%. The "volume-based cumulative 50% particle diameter (D50)" may also be referred to as the "volume average particle diameter D50" or the "median diameter."

The resin composition according to this embodiment may contain a bright pigment as a pigment. Examples of the bright pigments include metal-containing bright pigments that are at least one of simple metals such as aluminum, silver, gold, nickel, chromium, tin, zinc, indium, titanium, copper, and the like; metal compounds; alloys and mixtures thereof; pearlescent pigments having pearlescent luster or interference luster, such as mica, fish scale foil, bismuth acid chloride, silicon dioxide, metal oxides, metallic compounds, and laminated layers thereof.

When the resin composition according to the present embodiment contains a bright pigment, it is preferable that the bright pigment is plate-like (also expressed as fine plate-like, scale-like, and the like). Thereby, a more suitable metallic gloss can be imparted to the object.

When the resin composition according to this embodiment contains a coloring material (including dyes, pigments, and bright pigments), the content of the coloring material is not particularly limited, but is preferably 0.05% by mass or more, more preferably 0.08% by mass or more, and further more preferably 0.1% by mass or more with respect to the total amount of the resin composition. When the resin composition according to the present embodiment contains a coloring material, the content of the coloring material is preferably 20.0% by mass or less, more preferably 17.0% by mass or less, and further more preferably 15.0% by mass or less with respect to the total amount of the resin composition. The content of the coloring material is preferably 0.05% by mass or more and 20.0% by mass or less, more preferably 0.08% by mass or more and 17.0% by mass or less, and further more preferably 0.1% by mass or more and 15.0% by mass or less with respect to the total amount of the resin composition. When the content of the coloring material is within the range of 0.05% by mass or more or 20% by mass or less, the dispersion stability of the coloring material and the coloring power can be excellently balanced.

### [Pigment dispersant]

The resin composition according to this embodiment may contain a pigment dispersant together with the pigment. Herein, the pigment dispersant refers to a resin or a surfactant that has the function of improving the dispersibility of the pigment within the resin composition when it is attached to a part of the surface of the pigment.

The pigment dispersant that can be used in the resin composition according to this embodiment is not particularly limited. For example, cationic, anionic, nonionic, amphoteric, silicone (silicon), and fluorine-based surfactants can be used. Among the surfactants, polymer surfactants (polymer dispersants) such as those exemplified below are preferable.

As the pigment dispersant that can be used in the resin composition according to this embodiment, a water-soluble polymer dispersant can be preferably used. Examples of the water-soluble polymer dispersants include dispersants including polyester-based, polyacrylic-based, polyurethane-based, polyamine-based, polycaptolactone-based main chains, and side chains having a polar group such as an amino group, a carboxyl group, a sulfo group, and a hydroxy group. Examples include (co)polymers of unsaturated carboxylic esters such as polyacrylic esters; copolymers of aromatic vinyl compounds such as styrene and α-methylstyrene and unsaturated carboxylic esters such as acrylic esters; (partial) amine salts, (partial) ammonium salts and (partial) alkylamine salts of (co)polymers of unsaturated carboxylic acids such as polyacrylic acid; (co)polymers of hydroxyl group-containing unsaturated carboxylic acid esters such as hydroxyl group-containing polyacrylic esters and modified products thereof; polyurethanes; unsaturated polyamides; polysiloxanes; long-chain polyaminoamide phosphates; amides obtained by reaction between polyethyleneimine derivatives (poly(lower alkylene imine) and polyesters containing free carboxyl groups and their bases); polyallylamine derivatives (reaction products obtained by reacting polyallylamine with one or more compounds selected from three types of compounds that are polyester having a free carboxyl group, polyamide, and co-condensates of ester and amide (polyesteramides)), and the like. Among them, water-soluble polymer dispersants containing (meth)acrylic resins are preferable from the viewpoint of dispersion stability of the resin composition and image clarity of printed product.

Specific examples of the water-soluble polymer dispersants include SMA1440, SMA2625, SMA17352, SMA3840, SMA1000, SMA2000, SMA3000 manufactured by Cray Valley, JONCRYL67, JONCRYL678, JONCRYL586, JONCRYL611, JONCRYL680, JONCRYL682, JONCRYL690, JONCRYL819, JONCRYL-JDX5050, EFKA4550, EFKA4560, EFKA4585, EFKA5220, EFKA6230, Dispex Ultra PX4575 manufactured by BASF Japan, SOLSPERSE20000, SOLSPERSE27000, SOLSPERSE40000, SOLSPERSE41000, SOLSPERSE41090, SOLSPERSE43000, SOLSPERSE44000, SOLSPERSE45000, SOLSPERSE46000, SOLSPERSE47000, SOLSPERSE53095, SOLSPERSE54000, SOLSPERSE64000, SOLSPERSE65000, SOLSPERSE66000, SOLSPERSE J400, SOLSPERSE W100, SOLSPERSE W200, SOLSPERSE W320, and SOLSPERSE WV400 manufactured by Lubrizol, ANTI-TERRA-250, BYKJET-9150, BYKJ ET-9151, BYKJET-9152, BYKJET-9170, DISPERBYK-102, DISPERBYK-168, DISPERBYK-180, DISPERBYK-184, DISPERBYK-185, DISPERBYK-187, DISPERBYK-190, DISPERBYK-191, DISPERBYK-193, DISPERBYK-194N, DISPERBYK-198, DISPERBYK-199, DISPERBYK-2010, DISPERBYK-2012, DISPERBYK-2013 , DISPERBYK-2014, DISPERBYK-2015, DISPERBYK-2018, DISPERBYK-2019, DISPERBYK-2055, DISPERBYK-2060, DISPERBYK-2061, DISPERBYK-2081, DI SPERBYK-2096 manufactured by BYK, TEGO DISPERS650, TEGO DISPERS651, TEGO DISPERS652, TEGO DISPERS655, TEGO DISPERS660C, TEGO DISPERS670, TEGO DISPERS715W, TEGO DISPERS740W, TEGO DISPERS741W, TEGO DISPERS750W, TEGO DISPERS752W, TEGO DISPERS755W, TEGO DISPERS757W, TEGO DISPERS760W, TEGO DISPERS761W, TEGO DISPERS765W, ZETASPER SE170, ZETASPERSE179, ZETASPERSE182, ZETASPERSE3100, ZETASPERSE3400, ZETASPERSE3700, ZETASPERSE3800 manufactured by Evonik Industries, SN Dispersant 2010, SN Dispersant 2060, SN Dispersant 4215, SN Dispersant 5027, SN Dispersant 5029, SN Dispersant 5034, SN Dispersant 5468, Nopcol 5200, Nopcosant K, Nopcosant R, Nopcospers 44-C, Nopcosperse 6100, Nopcosperse 6150 manufactured by SAN NOPCO LIMITED, and the like. These pigment dispersants can be suitably used in the resin composition according to this embodiment.

### [Cationic or anionic compound]

The resin composition according to this embodiment may contain a cationic compound. The resin composition according to this embodiment does not necessarily contain a cationic or anionic compound, but by containing a cationic or anionic compound, the resin composition according to this embodiment can be a receiving liquid (pretreatment solution). In general, the coloring material included in the coloring ink is anionic, and by applying a receiving liquid (pretreatment liquid) containing a cationic compound to the base material before applying the coloring ink to the base material, the cationic compound makes it possible to aggregate the coloring material, thereby suppressing bleeding of the coloring ink. In addition, if the coloring material contained in the coloring ink is cationic, a receiving liquid (pretreatment liquid) including an anionic compound can be applied to the base material prior to applying the coloring ink to the base material, and the anionic compound makes it possible to aggregate the coloring material, thereby suppressing bleeding of the coloring ink.

Examples of the cationic compounds can include cationic resins and polyvalent metal salts (multivalent metal ions).

The cationic resin can be synthesized by known methods, or commercially available products can be used. Examples of commercially available products include APC-810, 815; D-6010, 6020, 6030, 6040, 6050, 6060, 6080, 6310, DEC-50, 53, 56, 65; FL-14, 42, 44LF, 61, 2099, 2250, 2273, 2350, 2550, 2565, 2599, 2650, 2850, 2949, 3050, 3150, 4340, 4420, 4440, 4450, 4520, 4530, 4535, 4540, 4620, 4820, FQP-1264; RSL-18-22, 4071H, 4400, 8391, 8391H, HD70C, HF70D; WS-72 (manufactured by SNF), Arafix 100, 251S, 255, 255LOX (manufactured by Arakawa Chemical), DK-6810, 6853, 6885; WS-4010, 4011, 4020, 4024, 4027, 4030 (manufactured by Seiko PMC), Senka F-300; Papiogen P-105, P-113, P-271, P-316; Pitchnol QG5A; Miliogen P-20; Unisense FPA100L, FPA101L, FPA102L, FPA1000L, FPA1001L, FPA100LU, FPA102LU, FPA1000LU; Unisense FCA1000L, FCA1001L, FCA1002L, FCA1003L, FCA5000L; Unisense KCA100L, KCA100LU, KCA1000LU, KCA1001LU; Unisense KHE100L, KHE101L, KHE102L, E104L, KHE105L, KHE107L, KHE1000L, KHE1001L; Unisense KHP10P, KHP11L, KHP10LU, KHP11LU, KHP12LU, KHP20LU: Unisense KHF10L, KHF11L; Unisense FPV1000L, FPV1000LU; Unisense FCV1000L; Unisense ZCA1000L, ZCA1001L, ZCA1002L, ZCA5000L; Unisense KPV100LU, KPV1000LU (manufactured by Senka), Paralock 410K101, 410K111, 420K308, 420K300, 460K313, 460K318, 470K308, 480K300, 490K300, 490K309, 500K30E, 500K40E, 59D, 920AP500, 975AP500, PD700, PD714L, PD714S, P600, (manufactured by Asada Chemical Co., Ltd.), Sumirez Resin 650(30), 675A, 6615, SLX-1 (manufactured by Taoka Chemical Industry Co., Ltd.), EP-1137; MZ-477, 480; NS-310X, 625XC (manufactured by Takamatsu Oil and Fat Co., Ltd.), PAA-D11-HCL, D19- HCL, D41-HCL, D19A; PAA-HCL-03, 05, 3L, 10L; PAA-1112CL, 21CL, AC5050A, N5050CL, SA; PAS-A-1, 5; PAS-H-1L, 5L, 10L; PAS-J-81, 81L; PAS-M-1, 1A, 1L; PAS-21, 21CL, 22SA-40, 24, 92, 92A, 880, 2201CL, 2401 (manufactured by Nittobo Medical), PP-17 (manufactured by Meisei Chemical Works, LTD.); Catiomaster PD-1, 7, 30, A, PDT-2, PE-10, PE-30, DT-EH, EPA-SK01, TMHMDA-E (manufactured by Yokkaichi Chemical Co., Ltd.), Jet Fix 36N, 38A, 5052 (manufactured by Satoda Kako Co., Ltd.), Movinyl 3500, 6910, 6940, 6950, 6951, 7820 (manufactured by Japan Coating Resin Co., Ltd.), CTW-113S, WEM-505C, WBR-2122C (manufactured by Taisei Fine Chemical Co., Ltd.), AP-1350, AE-803, AE-821, AM-3500 (manufactured by Resonac), Hydran CP-7050, and CP-7520 (manufactured by DIC), and the like.

Note here that the cationic resin may exist in the resin composition in a dissolved state or in a dispersed state as a polymer fine particle dispersion.

Examples of the metal salt include polyvalent metal salts including an ion of a polyvalent metal with a valence of at least two or more and an anion. Examples of polyvalent metal ions include calcium ions, magnesium ions, aluminum ions, titanium ions, iron (II) ions, iron (III) ions, cobalt ions, nickel ions, copper ions, zinc ions, barium ions, strontium ions, and the like. Among them, it is preferable to contain one or more ions selected from calcium ions, magnesium ions, nickel ions, zinc ions, and aluminum ions because they have a large interaction with the coloring material in the resin composition and is highly effective in suppressing bleeding and unevenness.

The anion may be an inorganic anion or an organic anion. Specific examples of organic anions include anions such as acetic acid, benzoic acid, salicylic acid, 2,4-dihydroxybenzoic acid, 2,5-dihydroxybenzoic acid, dimethylolpropionic acid, pantothenic acid, succinic acid, maleic acid, glutaric acid, suberic acid, trimellitic acid, and methylmalonic acid. Specific examples of inorganic anions include chloride ions, bromide ions, nitrate ions, sulfate ions, and the like.

The content of the cationic or anionic compound is not particularly limited, but the lower limit of the content of the cationic or anionic compound is preferably within the range of 0.1% by mass or more, more preferably within the range of 0.8% by mass or more, and further preferably within the range of 1.0% by mass or more with respect to the total amount of the resin composition. When the content of the cationic or anionic compound is within the range of 0.5% by mass or more with respect to the total amount of the resin composition, the coloring material can be fixed more effectively, and the bleeding of the coloring ink can be reduced. The upper limit of the content of the cationic or anionic compound is preferably within the range of 15% by mass or less, more preferably within the range of 8% by mass or less, and further more preferably within the range of 7% by mass or less with respect to the total amount of the resin composition. When the content of the cationic or anionic compound is within the range of 15% by mass or less with respect to the total amount of the resin composition, the storage stability and ejection stability of the resin composition are improved. The content of the cationic or anionic compound is preferably within the range of 0.1% by mass or more and 15% by mass or less, more preferably within the range of 0.8% by mass or more and 8% by mass or less, and further preferably within the range of 1.0% by mass or more and 7% by mass or less with respect to the total amount of the aqueous ink composition.

### [Leveling agent]

The resin composition according to this embodiment may contain a leveling agent as a surfactant different from the emulsifier and pigment dispersant contained in the above-mentioned copolymer. When the leveling agent is contained, the surface tension of the resin composition can be controlled within an appropriate range. Examples of the leveling agents include, but not limited to, anionic surfactants, nonionic surfactants, silicone (silicon) surfactants, fluorine surfactants, acetylene glycol surfactants, and the like, from the viewpoint that excellent adjusting property of the surface tension can be obtained.

Specific examples include Emar, Latemul, Perex, Neoperex, Demol (all anionic surfactants; manufactured by Kao Corporation), Sunnol, Liporan, Ripon, and Ripal (all anionic surfactants; manufactured by Lion Corporation), Neugen, Epan, and Sorgen (all nonionic surfactants; manufactured by Daiichi Kogyo Seiyaku Co., Ltd.), Emulgen, Amit, and Emazol (all nonionic surfactants; manufactured by Kao Corporation), Naroacty, Emulmin, and Sanonic (all nonionic surfactants; manufactured by Sanyo Chemical Industries, Ltd.), Surfynol 104, 82, 420, 440, 465, 485, TG, 2502, SE-F, 107L, Dynol 360, Dynol 604, Dynol 607 (all acetylene glycol surfactants; manufactured by Evonik), Dynol 960 (a blend of acetylene glycol and silicon surfactants; manufactured by Evonik), Surfynol AD01 (alkane glycol surfactants; manufactured by Evonik), Olfin E1004, E1010, PD004, and EXP4300 (all acetylene glycol surfactants; manufactured by Nissin Chemical Industry Co., Ltd.), Megafac (fluorinated surfactants; manufactured by DIC Corporation), Surflon (fluorosurfactant; manufactured by AGC Seimi Chemical Co., Ltd.), BYK302, 306, 307, 331, 333, 345, 346, 347, 348, 349, 3420, 3450, 3451, 3455, and 3456 (all silicone (silicon) surfactant; manufactured by Bikkemie Co., Ltd.), KP-110, 112, 323, 341, and 6004 (all silicone (silicon) surfactants; manufactured by Shin-Etsu Chemical Co., Ltd.), Silface SAG002, Silface SAG005, Silface SAG008, Silface SAG014, Silface SAG503A, Silface SJM-002, and Silface SJM-003 (all silicone (silicon) surfactants; manufactured by Nissin Chemical Industry Co., Ltd.), TEGO FLOW 425, TEGO Glide 100, 110, 130, 410, 432, 440, 450, 482, 490, 492, 494, 496, ZG400, TEGO Twin 4000, TEGO Twin 4100, TEGO Twin 4200, TEGO Wet 240, KL245, 250, 260, 265, 270, 280 (all silicone (silicon) surfactants; manufactured by Evonik), TEGO Wet 500, 505, 510, 520 (all nonionic surfactants; manufactured by Evonik), and the like.

The content of the leveling agent is not particularly limited, but the lower limit of the content of the leveling agent is preferably within the range of 0.30% by mass or more, more preferably within the range of 0.40% by mass or more, and further preferably 0.50% by mass or more with respect to the total amount of the resin composition. The upper limit of the content of the leveling agent is preferably within the range of 5.0% by mass or less, more preferably within the range of 4.0% by mass or less, and further preferably 3.0% by mass or more with respect to the total amount of the resin composition. The content of the leveling agent is preferably in the range of 0.30% by mass or more and 5.0% by mass or less, 0.40% by mass or more and 4.0% by mass or less, and further preferably within the range of 0.50% by mass or more and 3.0% by mass or less with respect to the total amount of the aqueous ink composition.

### [Other components]

The resin composition according to the present embodiment may further include conventionally known additives, as necessary. Examples of the additives include waxes, viscosity modifiers, pH adjusting agents, antioxidants, preservatives, antifungal agents, antibacterial agents, antiviral agents, ultraviolet absorbers, light stabilizers, and the like.

### <Method for preparing resin composition>

The method for preparing the resin composition according to this embodiment is not particularly limited, and examples of the method include a method for preparing a resin composition by adding a self-dispersing pigment, resin, surfactant, and other components as necessary to a water-soluble solvent; a method for preparing a resin composition by adding a pigment and a dispersant to a water-soluble solvent and dispersing thereof, and then adding a resin (resin dispersion), a surfactant, and other components as necessary, a method for preparing a resin composition by adding pigment, resin, and surfactant to the water-soluble solvent, and then dispersing the pigment, and the like.

A method of applying the resin composition according to this embodiment onto a surface of a base material is not particularly limited, and examples thereof include an inkjet method, a gravure method, a flexo method, a spray method, a screen method, a coater method, and the like. Among them, the inkjet method is preferable. With the inkjet method, it is possible to form a desired image by ejection in an arbitrary position on the base material of the desired image on the electron.

The surface tension of the resin composition according to this embodiment is not particularly limited, but the upper limit of the surface tension at 25°C of the resin composition according to this embodiment is preferably 40.0 mN/m or less, more preferably 35.0 mN/m or less, and even more preferably 32.0 mN/m or less. The lower limit of the surface tension at 25°C of the resin composition according to this embodiment is preferably 17.0 mN/m or more, more preferably 18.0 mN/m or more, and even more preferably 19.0 mN/m or more. The surface tension range of the resin composition according to this embodiment at 25°C is preferably 17.0 mN/m or more and 40.0 mN/m or less, more preferably 18.0 mN/m or more and 35.0 mN/m or less, and further more preferably 19.0 mN/m or more and 32.0 mN/m or less.

### <<4. Ink set>>

The above resin composition may be a coloring ink, a metallic ink, and the like, or a receiving liquid including a cationic compound, or a clear ink that does not contain a coloring material, or a primer agent, or an overcoat ink. The ink set according to this embodiment may be a combination of these ink compositions.

The ink set according to this embodiment may be a resin composition in which at least one composition included in the ink set may be a resin composition containing a copolymer including at least two types of monomers as a constituent unit. For example, in an ink set including a composition A and a composition B, the composition A may be a resin composition containing a copolymer including at least two types of monomers as constituent units, and the composition B may be a composition that is different from the resin composition containing a copolymer including at least two types of monomers as constituent units. Furthermore, both the composition A and the composition B may be resin compositions containing copolymers including at least two types of monomers as constituent units. The same applies to ink sets including three or more types of compositions.

Examples of the ink set according to this embodiment include an ink set including a coloring ink composition containing a coloring material and a receiving liquid (pretreatment liquid) including a cationic compound, and an ink set including a coloring ink composition containing a coloring material, a receiving liquid (pretreatment liquid) including a cationic compound, and an overcoat ink, and an ink set including a coloring ink composition containing a coloring material and an overcoat ink.

Furthermore, the ink set may be a combination of coloring ink compositions containing a coloring material, and for example, an ink set may be a combination of a plurality of ink compositions such as coloring ink compositions of yellow, magenta, cyan, black, and intermediate colors (for example, orange ink, green ink, blue ink, red ink) or light colors (for example, light magenta ink, light cyan ink, light black ink). Furthermore, the ink set may be an ink set including a white ink composition containing a white coloring material, a yellow ink composition, a magenta ink composition, a cyan ink composition, and a black ink composition, and an ink set including a white ink composition containing a white coloring material, a yellow ink composition, a magenta ink composition, a cyan ink composition, a black ink composition, and an intermediate coloring ink composition or a light color ink composition of yellow, magenta, cyan, or black. Furthermore, the ink set may be an ink set including a metallic ink including a bright pigment, a yellow ink composition, a magenta ink composition, a cyan ink composition, and a black ink composition, an ink set including a metallic ink including a bright pigment, and a yellow ink composition, a magenta ink composition, a cyan ink composition, a black ink composition, and an intermediate color ink composition or a light color ink composition of yellow, magenta, cyan, or black.

### <<5. Recording method>>

The recording method according to this embodiment is a recording method of coating a base material with the above resin composition containing a copolymer including at least two types of monomers as a constituent unit.

Since the above resin composition containing a copolymer including at least two types of monomers as a constituent unit has high storage stability, the resin composition can be applied on a base material in a state in which high storage stability is maintained.

A method of applying the resin composition containing a copolymer including at least two types of monomers as a constituent unit on the surface of the base material is not particularly limited, and examples thereof include an inkjet method, a gravure method, a flexo method, a spray method, a screen method, and a coater method. Among them, the inkjet method is preferable. With the inkjet method, ejection in any positions on the base material can be carried out.

Furthermore, the recording method according to this embodiment may include a drying step of drying the resin composition applied on the surface of the base material. Thereby, the heating temperature during printing can be adjusted and the productivity of recorded products can be improved.

Examples of methods for drying the resin composition applied on the surface of the base material include methods for drying using a heating mechanism such as a pre-heater, a platen heater, and an after-heater provided in the device, or may be a blower mechanism that blows hot air or room temperature air to the surface of the recorded product, or may be a radiation mechanism of irradiating a surface of the recorded product with infrared rays or the like. Furthermore, a plurality of these heating mechanisms may be combined.

In particular, the above-mentioned resin composition containing a copolymer including at least two types of monomers as a constituent unit can form a coating film sufficiently even when dried at a relatively low temperature, and the resulting recorded product can be high solvent resistance. Therefore, by drying at a low temperature, it is possible to produce recorded products with high productivity while reducing energy load and load on the device.

Specifically, in the recording method according to this embodiment, drying is carried out so that the surface of the recorded product is a temperature of 120°C or less, more preferably 100°C or less, and further more preferably 80°C or lower. Furthermore, in the recording method according to the present embodiment, drying is carried out so that the surface of the recorded product is a temperature of 30°C or higher, more preferably 35°C or higher, and further more preferably a temperature of 40°C or higher. In the recording method according to the present embodiment, drying is carried out so that the surface of the recorded product is a temperature of 30°C or higher and 120°C or lower, more preferably 35°C or higher and 100°C or lower, and 40°C or higher and 80°C or lower.

Furthermore, in a recording method in which coating is carried out on a base material by an inkjet method, the above-mentioned resin composition containing a copolymer including at least two types of monomers as a constituent unit may be ejected by a piezo method, a thermal method, an electrostatic method, and the like.

### <<6. Method for manufacturing recorded product>>

The above-mentioned recording method may also be defined as a method of producing a recorded product in which the above-mentioned resin composition containing a copolymer including at least two types of monomers as a constituent unit is applied onto a base material.

### <<7. Recorded product>>

Each layer constituting the recorded product produced by the method for producing the recorded product of the above embodiment will be described. Specifically, it is a recorded product in which the above-mentioned resin composition containing a copolymer including at least two types of monomers as a constituent unit or the resin composition included in the above-mentioned ink set is applied to the base material. Hereinafter, a medium (recording medium) and a resin composition layer constituting the recorded product will be described.

The base material (recording medium) included in the recorded product according to this embodiment is not particularly limited, and various types of base materials can be used, and non-absorbent base materials such as a resin base material, a metal plate, and glass, or absorbent base materials such as paper and cloth, or base materials such as a base material having a receiving layer, which is subjected to surface coating, may be used.

Non-absorbent base materials include resin base materials such as polyester resin, polypropylene synthetic paper, polypropylene resin, polyethylene resin, acrylic resin, styrene resin, polycarbonate resin, ABS resin, vinyl chloride resin, and polyimide resin, and metal, metal foil coated paper, glass, synthetic rubber, and natural rubber, and the like.

Since the above-mentioned resin composition containing a polymer including a specific monomer as a constituent unit can form a coating film with high adhesion even to olefin resins, the base material (recording medium) is preferably olefin resin. Among them, particularly high adhesion is exhibited to the surfaces of olefin resins that have been subjected to surface treatment such as corona treatment, flame treatment, plasma treatment, blaze treatment, ultraviolet irradiation treatment, and chromic acid treatment. Note here that the olefin resin may be unstretched or may be stretched, for example, uniaxially stretched, biaxially stretched, or the like.

Examples of the absorbent base material include woody paper, medium-quality paper, high-quality paper, synthetic paper, cotton, synthetic fabric, silk, hemp, fabric, nonwoven fabric, leather, and the like.

Examples of the surface-coated base material include coated paper, art paper, cast paper, lightweight coated paper, lightly coated paper, and the like.

### [Coating film of resin composition]

A coating film of a resin composition is a layer formed by volatilization of a solvent (water or water-soluble organic solvent) included in the above-mentioned resin composition containing a copolymer including at least two types of monomers as a constituent unit. For example, when the resin composition contains a coloring material, the coating film becomes a decorative layer or a base layer for forming a desired image. Note here that in this description, the shape of the "coating film" is not limited to, for example, a flat plate or a layered shape, and may have unevenness, or may have holes formed in some parts, or a coating film formed on a part of the surface. Furthermore, for convenience, a coating film of a resin composition that is absorbed into an absorbent base material so that the coating film of the resin composition becomes a part of the base material is also referred to as a coating film of the resin composition.

When the above-mentioned resin composition containing a copolymer including at least two types of monomers as a constituent unit is a receiving liquid including a cationic compound, the above-mentioned resin composition (a receiving liquid) containing a copolymer including at least two types of monomers as a constituent unit may be applied on the base material, and the above-mentioned composition (coloring ink) containing a copolymer including at least two types of monomers as a constituent unit may be applied thereon, or the above resin composition (receiving liquid) containing a copolymer including at least two types of monomers as a constituent unit may be applied on the base material, and then a composition (coloring ink) that is different from the above-mentioned resin composition (coloring ink) containing a copolymer including at least two types of monomers as a constituent unit may be applied thereon.

Furthermore, when the above-mentioned resin composition containing a copolymer including at least two types of monomers as a constituent unit is an overcoat ink, an overcoat layer is formed on the surface of the recorded product. Note here that in this case, the composition forming the recording layer of the recorded product may be the resin composition containing a copolymer including at least two types of monomers as a constituent unit, or may be a composition that is different from the above-mentioned resin composition containing a copolymer including at least two types of monomers as a constituent unit.

### <<8. Device>>

Examples of the device according to this embodiment include a printing machine using the above-mentioned resin composition containing a copolymer including at least two types of monomers as a constituent unit, or the resin composition included in the above-mentioned ink set. The device according to this embodiment is not particularly limited, but examples thereof include an inkjet recording device, a gravure printing machine, a flexo printing machine, a spray printing machine, a screen printing machine, and various coaters such as a blade coater and a die coater.

The device according to this embodiment is preferably an inkjet recording device equipped with a container filled with the resin composition described above or a resin composition included in the ink set described above. With the inkjet recording device, ejection in an arbitrary position on the base material can be carried out.

Note here that the device is equipped with a container for supplying the resin composition described above or the resin composition included in the ink set. These storage containers are not particularly limited, and include, for example, containers such as ink bottles, pouches, bag-in-boxes, and drums. Further, these storage containers may be further housed in a cartridge or the like. The material of the storage container is not particularly limited, and may be made of resin conventionally known, or may be made of a material including some metal material (for example, an aluminum pouch with an aluminum vapor deposition layer).

Furthermore, this device preferably includes a drying mechanism that dries the resin composition after the resin composition is ejected. This makes it possible to adjust the surface temperature of the recorded product during printing and to effectively remove volatile components contained in each resin composition.

The drying mechanism is not particularly limited as long as it can dry a medium to be recorded, but the preferable examples include a heater such as a pre-heater, platen heater, and an after-heater, radiation irradiation, or a blower mechanism (hot air, room temperature air, and the like). Furthermore, mechanism including a combination a plurality of these heating mechanisms may be used.

Furthermore, when this device is an inkjet recording device, the ejection method in each ejection part may be any methods such as a piezo method, a thermal method, or an electrostatic method.

### EXAMPLES

Hereinafter, the present invention will be described in more detail with reference to Examples, but the present invention is not limited to these descriptions in any way.

### 1. Synthesis of resin (resin dispersion)

### [Example 1] Synthesis of resin dispersion 1

A mixture including 88.7 parts of cyclohexyl methacrylate, 9.8 parts of n-butyl methacrylate, and 1.50 parts of methacrylic acid was added to an aqueous solution including 2.0 parts of "Emulgen A-90 (manufactured by Kao Corporation; nonionic surfactant, solid content 100%)" and 6.2 parts of "Emar 20CM (manufactured by Kao Corporation; anionic surfactant, solid content of 25%)" solved in 41.0 parts of water (deionized water) and stirred to produce an emulsified monomer composition.

Next, 185.0 parts of water (deionized water) and 4.1 parts of "EMAL 20CM" (manufactured by Kao Corporation; an anionic surfactant, solid content 25%) were was charged in a glass reaction vessel equipped with a thermometer, a stirrer, a reflux condenser, a nitrogen introduction tube, and a dropping funnel, stirred to dissolve, and heated to 73°C. To the mixture, 5% by mass of the emulsified monomer was added and stirred, and 1.4 parts of 3% potassium persulfate was added to the reaction vessel to perform an initial polymerization reaction. Thereafter, the temperature was raised to 80°C, and while maintaining the temperature, 6.7 parts of 3% potassium persulfate and the remaining emulsified monomer composition were added dropwise over 4 hours to allow the polymerization reaction to proceed. After the dropwise addition was completed, the pH was adjusted to 8 using a 10% ammonia aqueous solution, and the reaction was aged for 1 hour. Thereafter, the temperature was cooled to room temperature to obtain a milky white resin dispersion. The weight average molecular weight, solid content concentration, viscosity, average particle diameter, and theoretical glass transition temperature of the obtained resin dispersion 1 are shown in the table below.

### [Examples 2 to 4] Synthesis of resin dispersions 2 to 4

Resin dispersions 2 to 4 were obtained in the same manner as in Example 1 except that the amounts of cyclohexyl methacrylate and n-butyl methacrylate were changed as shown in Table 2 below. The weight average molecular weight, solid content concentration, viscosity, average particle diameter, and theoretical glass transition temperature of the obtained resin dispersions 2 to 4 are shown in Table 2 below.

### [Examples 5 to 7] Synthesis of resin dispersions 5 to 7

Resin dispersions 5 to 7 were obtained in the same manner as in Example 1 except that n-butyl methacrylate was changed to cyclohexyl acrylate and the blending amounts of cyclohexyl methacrylate and cyclohexyl acrylate were changed as shown in the table below. The weight average molecular weight, solid content concentration, viscosity, average particle diameter, and theoretical glass transition temperature of the resulting resin dispersions 5 to 7 are shown in the table below.

### [Examples 8 to 9] Synthesis of resin dispersions 8 to 9

Resin dispersions 8 and 9 were obtained in the same manner as in Example 1 except that n-butyl methacrylate was not used and the blending amounts of cyclohexyl methacrylate and cyclohexyl acrylate were changed as shown in the table below. The weight average molecular weight, solid content concentration, viscosity, average particle diameter, and theoretical glass transition temperature of the resulting resin dispersions 8 and 9 are shown in the table below.

### [Example 10] Synthesis of solution resin 1 (solution polymerization)

To a reactor provided with a cooling tube, an addition funnel, a nitrogen inlet, a mechanical stirrer, and a digital thermometer, 100.0 parts by mass of diethylene glycol ethyl methyl ether was charged and the temperature was raised to 95°C under a nitrogen atmosphere, and a solution in which 98.5 parts by mass of cyclohexyl methacrylate, 1.5 parts by mass of methacrylic acid, and 1.60 parts by mass of Perbutyl O (manufactured by NOF Corporation) were mixed was continuously added dropwise over 2 hours. Thereafter, the temperature was maintained at 95°C, and 0.50 parts by mass of Perbutyl O (manufactured by NOF Corporation) was added four times every 30 minutes after the completion of the dropwise addition. Thereafter, aging was carried out for 3.5 hours, and then, 77.5 parts by mass of diethylene glycol ethyl methyl ether were added for dilution. After dilution, a solution of the resin 1 was obtained by cooling to room temperature. The weight average molecular weight, solid content, viscosity, and other physical properties of the coating film of the obtained resin 1 are shown in the table below. The solid content of the solution resin 1 was measured by heating in 150°C oven for 2 hours.

### [Example 11] Synthesis of resin dispersion 10 (suspension polymerization)

To 941.3 g of water (deionized water) in which 36.9 g of magnesium chloride was dissolved, 188.3 g of water (deionized water) in which 26.0 g of sodium hydroxide was dissolved was added, and the mixture was stirred for 20 minutes. To the mixture solution, a mixture including 78.8 parts of cyclohexyl methacrylate, 19.7 parts of n-butyl methacrylate, 1.5 parts of methacrylic acid, and 5.81 g of Perbutyl O (manufactured by NOF Corporation) was added, and the obtained mixture was stirred with a homogenizer to produce a monomer composition.

Next, the above monomer composition was charged into a glass reaction vessel provided with a thermometer, a stirrer, a reflux condenser, and a nitrogen introduction tube, and the temperature was raised to 80°C while stirring. Thereafter, the polymerization reaction was allowed to proceed for 6 hours while the temperature maintained at 80°C. After the reaction was completed, the pH was adjusted to 8 using hydrochloric acid, and the reaction was aged for 1 hour. Thereafter, the mixture was cooled to room temperature to obtain a milky white resin dispersion. The weight average molecular weight, solid content concentration, viscosity, average particle diameter, and theoretical glass transition temperature of the obtained resin dispersion 10 are shown in the table below.

### [Examples 12 to 19] Synthesis of resin dispersions 11 to 18

Resin dispersions 11 to 18 were obtained in the same manner as in Example 1 except that the blending amounts of cyclohexyl methacrylate, n-butyl methacrylate, surfactant, and polymerization initiator were changed as shown in the table below, and after completion of dropwise addition of the monomers, the aging time was changed to 10 minutes (resin dispersion 18), 20 minutes (resin dispersion 17), 30 minutes (resin dispersion 16), and 45 minutes (resin dispersion 15). The weight average molecular weight, solid content concentration, viscosity, average particle diameter, and theoretical glass transition temperature of the resulting resin dispersions 11 to 18 are shown in the table below.

### [Examples 20 to 26] Synthesis of resin dispersions 19 to 25

Resin dispersions 19 to 25 were obtained in the same manner as in Example 1 except that the types and blending amounts of monomers were changed as shown in the table below. The weight average molecular weight, solid content concentration, viscosity, average particle diameter, and theoretical glass transition temperature of the resulting resin dispersions 19 to 25 are shown in the table below.

### [Example 27] Synthesis of resin dispersion 26

A mixture including 74.1 parts of cyclohexyl methacrylate, 18.5 parts of n-butyl methacrylate, and 13.1 parts of 2-(dimethylamino)ethylbenzoate methacrylate was added to an aqueous solution in which 40.0 parts of water (deionized water), 2.0 parts of "Emulgen A-90 (manufactured by Kao Corporation; nonionic surfactant, solid content 100%)" and 6.2 parts of "Sanisol B-50 (manufactured by Kao Corporation; cationic surfactant, solid content 50%)" were dissolved, and the mixture was stirred to produce an emulsified monomer composition.

Next, to a glass reaction vessel provided with a thermometer, a stirrer, a reflux condenser, a nitrogen introduction tube, and a dropping funnel, 190.0 parts of water (deionized water) and 4.1 parts of "Sanisol B-50 (manufactured by Kao Corporation; cationic surfactant, solid content 50%)" were charged and stirred to dissolve, and heated to 73°C. To the obtained mixture solution, 5% by mass of the emulsified monomer was added and stirred, and 0.5 parts of a 15% aqueous solution of 2,2-azobis(2-diaminopropane)dihydrochloride was added to the reaction vessel to perform an initial polymerization reaction. Thereafter, the temperature was raised to 80°C, and while the temperature was maintained, 1.2 parts of a 14% aqueous solution of 2,2-azobis(2-diaminopropane) dihydrochloride and the remaining emulsified monomer composition were added dropwise over 4 hours. After completion of the dropwise addition, the reaction was aged for 1 hour. Thereafter, the temperature was cooled to room temperature to obtain a milky white resin dispersion. The weight average molecular weight, solid content concentration, viscosity, average particle diameter, and theoretical glass transition temperature of the resin dispersion 26 are shown in the table below.

### [Example 28] Synthesis of dispersion 27

Resin dispersion 27 was obtained in the same manner as in Example 27 except that the blending amount of monomers was changed as shown in the table below. The weight average molecular weight, solid content concentration, viscosity, average particle diameter, and theoretical glass transition temperature of the obtained resin dispersion 27 are shown in the table below.

### [Example 29] Synthesis of resin dispersion 28

Resin dispersion 28 was obtained in the same manner as in Example 26 except that n-butyl methacrylate was changed to cyclohexyl acrylate and the blending amounts of cyclohexyl methacrylate and cyclohexyl acrylate were changed as shown in the table below. The weight average molecular weight, solid content concentration, viscosity, average particle diameter, and theoretical glass transition temperature of the obtained resin dispersion 28 are shown in Table 2.

### [Example 30] Synthesis of resin dispersion 29

Resin dispersion 29 was obtained in the same manner as in Example 29 except that the blending amounts of monomer was changed as shown in the table below. The weight average molecular weight, solid content concentration, viscosity, average particle diameter, and theoretical glass transition temperature of the obtained resin dispersion 29 shown in the table below.

### [Comparative Examples 1 to 4] Synthesis of resin dispersions 30 to 33

Resin dispersions 30 to 33 were obtained in the same manner as in Example 1 except that the types and blending amounts of monomers were changed as shown in the table below. The weight average molecular weight, solid content concentration, viscosity, average particle diameter, and theoretical glass transition temperature of the resulting resin dispersions 30 to 33 are shown in the table below.

### 2. Evaluation of Resin (resin dispersion)

The resin dispersions obtained in the above Examples and Comparative Examples were evaluated as follows.

### (Storage stability)

The storage stability of the resins (resin dispersions) of Examples and Comparative Examples were evaluated. Specifically, the resins (resin dispersions) of Examples and Comparative Examples were placed in airtight containers and left in a hot air dryer at 60°C for 7 days. Determination was made by visually observing the states after being left standing and evaluating it based on the following criteria.

Very good (indicated by bullseye symbol (⊙)): no change was observed at all in appearance and viscosity. Good (indicated by circle symbol (o)): no change in appearance was observed, but some changes were observed in which the viscosity slightly increases or decreases. Fair (indicated by triangle symbol (Δ)): some protrusions in appearance and the viscosity increases or decreases significantly. Poor (indicated by cross symbol (x)): gelled or separated in a pudding-like state.

### (Solid content)

The mass of the solid content of the resins (resin dispersions) of Examples and Comparative Examples excluding Example 10 was measured. Specifically, the resins (resin dispersions) of Examples and Comparative Examples were heated in a 105°C oven for 1 hour, and the mass of the resins after heating was measured.

### (Viscosity)

The viscosity of the resins (resin dispersions) of Examples and Comparative Examples was measured. Specifically, the viscosity of the resins (resin dispersions) of Examples and Comparative Examples was measured at 25°C using a B-type viscometer.

### (Average particle diameter)

The average particle diameters of the resins (resin dispersions) of Examples and Comparative Examples were measured. Specifically, the resins (resin dispersions) of Examples and Comparative Examples were measured at a measurement temperature of 25°C using a concentrated particle size analyzer FPAR-1000 (manufactured by Otsuka Electronics Co., Ltd.).

### (Weight average molecular weight)

The weight average molecular weights of the resins (resin dispersions) of Examples and Comparative Examples were measured. Specifically, the resins (resin dispersions) of Examples and Comparative Examples were subjected to gel permeation using a GPC measurement device (manufactured by Tosoh Corporation, "HLC-8320GPC") by chromatography using polystyrene as a standard substance and THF as an eluent.

### (Amount of unreacted monomer)

The amount of unreacted monomer was measured for the resins (resin dispersions) of Examples and Comparative Examples. Specifically, the amounts of unreacted monomers in the resins (resin dispersions) of Examples and Comparative Examples were determined by gas chromatography using Nexis GC-2030 (manufactured by Shimadzu Corporation). "SH-Rtx-Wax (30 m, 0.25 mm ID, 0.25 µm df)" was used for the column. A flame ionization detector (FID) was used as a detector, and nitrogen was used as a carrier gas.

### 3. Preparation of pigment dispersion

To 81.85 g of water (deionized water), 2.5 g of pigment dispersion resin ((meth)acrylic resin, weight average molecular weight 20000, acid value 143 mgKOH/g) and 0.6 g of N,N-dimethylaminoethanol were dissolved, and to the solution, 15 g of C.I. Pigment Blue 15:3 and 0.05 g of an antifoaming agent ("Surfynol 104PG" manufactured by Air Products) were added and dispersed in a paint shaker using zirconia beads to obtain a pigment dispersion.

### 4. Preparation of resin composition

### [Examples 1 to 20, Comparative Examples 1 to 4]

A resin composition including 20% by mass of pigment dispersion, 25% by mass of the polymer fine particle dispersion (solid content concentration 30%), 25% by mass of 1,2-propanediol, 0.5% by mass of polysiloxane compound, and 29.5% by mass of water (deionized water) was produced.

### [Examples 21 and 22]

A resin composition including 25% by mass of the polymer fine particle dispersion (solid content concentration 30%), 9% by mass of 1,2-hexanediol, 25% by mass of 1,2-propanediol, 0.5% by mass of a polysiloxane compound, and 40.5% by mass of water (ionized water) was produced.

### 4. Evaluation of resin composition

### (Storage stability)

The storage stability of the resin compositions containing the resins (resin dispersions) of Examples and Comparative Examples was evaluated. Specifically, the resin composition was heated in an oven at 60°C for one week, and the viscosity before and after heating was measured at a liquid temperature of 25°C, and evaluated based on the following evaluation criteria. The evaluation results are shown in the table below (denoted as "storage stability" in the table).

### Evaluation criteria

Very good (indicated by bullseye symbol (⊙)): viscosity change rate was 5% or less
Good (indicated by circle symbol (o)): viscosity change rate was more than 5% but less than 7.5%
Fair (indicated by triangle symbol (Δ)): viscosity change rate was 7.5% or more and less than 10%
Poor (indicated by cross symbol (x)): viscosity change rate was 10% or more (out of practical use)

### (Adhesion)

Adhesion was evaluated for resin compositions containing the resins of Examples and Comparative Examples. Specifically, the resin compositions of Examples and Comparative Examples were coated onto printing base materials (surface-modified base material: corona-treated OPP, untreated base material: untreated OPP) using bar coater #4. After drying at 100°C for 8 minutes, cellophane tape (trade name: Cellotape (registered trademark), manufactured by Nichiban Co., Ltd.) was sufficiently pressed against the coated area, and the cellophane tape was then peeled off. Then, adhesion was visually observed, and evaluated according to the evaluation criteria shown below.

### Evaluation criteria

Very good (indicated by bullseye symbol (⊙)): the coated surface was not peeled off at all. Good (indicated by circle symbol (∘)): the coated surface was slightly peeled off. Fair (indicated by triangle symbol (Δ)): the area of the coated surface that was peeled off was larger than the area of the coated surface that remained without peeling off. Poor (indicated by cross symbol (x)): the entire coated surface was peeled off.

### (Out of practical use)

### (Blocking resistance)

Blocking resistance of the resin compositions containing the resins (resin dispersions) of Examples and Comparative Examples were evaluated. Specifically, the resin compositions of Examples and Comparative Examples were applied to a printing base material (surface-modified base material: corona-treated OPP) using bar coater #4, and after drying at 100°C for 8 minutes, the coated surface and the non-coated surface of the base material were placed on the top of the other, a load of 3 kg/cm² was applied for 18 hours at 50°C and 80% humidity, and then quickly peeled off, and the blocking resistance was evaluated based on the following criteria. Evaluation criteria
Very good (indicated by bullseye symbol (⊙)): no coating film was shifted to the non-coated surface, and no peeling sound occurred
Good (indicated by circle symbol (o)): no coating film was shifted to the non-coated surface, and peeling sound occurred slightly
Fair (indicated by triangle symbol (Δ)): no coating film was shifted to the non-coated surface, at the time of peeling, resistance occurred and peeling sound occurred
Poor (indicated by cross symbol (x)): the coating film was shifted to the non-coated surface (out of practical use)

### (Solvent resistance)

The resin compositions containing the resins (resin dispersions) of Examples and Comparative Examples were evaluated for solvent resistance. Specifically, a solid image print with a print density of 100% was produced on a printing base material to be printed (surface-modified base material to be printed: corona-treated OPP) using an ink jet recording device, and dried at arbitrary temperatures shown in the table below (60°C, 80°C, 100°C) for 8 minutes. Thereafter, an appearance of the coating film on the coated surface of the ink composition immediately after printing was observed under the conditions in which a Gakushin friction fastness tester type II was used, a weight was 200 g, and cloth was kanakin No. 3 cloth immersed in an ethanol aqueous solution with a mass concentration of 50%. The appearance of the coating film was evaluated using the following evaluation criteria (coating film appearance index) (indicated as solvent resistance in the table).

### Evaluation criteria

Very good (indicated by bullseye symbol (⊙)): no change in appearance after 50 times
Good (indicated by circle symbol (o)): no change in appearance after 25 times, slight change in appearance after 50 times
Fair (indicated by triangle symbol (Δ)): no change in appearance after 10 times, slight change in appearance after 25 times
Poor (indicated by cross symbol (x)): change in appearance after 10 times (Out of practical use

### (Stretchability)

The stretchability of the resin compositions containing the resins (resin dispersions) of Examples and Comparative Examples was evaluated. Specifically, the resin composition was applied on a printing base material to be printed (adhesive polyvinyl chloride film) using a bar coater #4 and dried at 100°C for 8 minutes. Thereafter, the base material coated with the resin composition was cut into a vertically long rectangle measuring 1.5 cm × 9.0 cm, and the backing paper was removed. The upper and lower parts were fixed and the entire coating was stretched at a speed of 0.1 mm/min. The test was stopped at the point where there were changes such as cracks in the coating film, and the stretching rate at that time was evaluated.

### Evaluation criteria

Very good (indicated by bullseye symbol (⊙)): stretching rate was 150% or more
Good (indicated by circle symbol (o)): stretching rate was 130% or more and less than 150%
Fair (indicated by triangle symbol (Δ)): stretching rate was 120% or more and less than 130%
Poor (indicated by cross symbol (x)): stretching rate was less than 120% (out of practical use)

**[Table 2-1]**

| | | | Example 1 | Example 2 | Example 3 | Example 4 | Example 5 | Example 6 | Example 7 | Example 8 | Example 9 |
|---|---|---|---|---|---|---|---|---|---|---|---|
| | | | Resin dispers on 1 | Res n dispers on 2 | Res n dispers on 3 | Resin dispers on 4 | Res n dispers on 5 | Resin dispers on 6 | Resin dispers on 7 | Resin dispers on 8 | Resin dispers on 9 |
| | | | CHMA/BMA | | | | CHMA/CHA | | | CHMA | CHA |
| | | | 90/10 | 80/20 | 70/30 | 50/48.5 | 90/10 | 80/20 | 70/30 | 100 | 100 |
| | Unsaturated monomer A (wt%) | CHMA | 88.7 | 78.8 | 69.0 | 50.0 | 88.7 | 78.8 | 69.0 | 98.5 | - |
| | | CHA | - | - | - | - | 9.9 | 19.7 | 29.6 | - | 98.5 |
| | | DCPMA | - | - | - | - | - | - | - | - | - |
| | | THFMA | - | - | - | - | - | - | - | - | - |
| | | CPhA | - | - | - | - | - | - | - | - | - |
| | Unsaturated monomer B (wt%) | MAA (containing acid group) | 1.5 | 1.5 | 1.5 | 1.5 | 1.5 | 1.5 | 1.5 | 1.5 | 1.5 |
| | | DMMA (containing amino group) | - | - | - | - | - | - | - | - | - |
| Raw materials used | Unsaturated monomer C (wt%) | MMA | - | - | - | - | - | - | - | - | - |
| | | BMA | 9.9 | 19.7 | 29.6 | 48.5 | - | - | - | - | - |
| | Polymerization initiator(wt%) | Potassium persulfate | 0.24 | 0.24 | 0.24 | 0.24 | 0.24 | 0.24 | 0.24 | 0.24 | 0.24 |
| | | 2,2'-azobis(2-aminodipropane) dihydrochloride | - | - | - | - | - | - | - | - | - |
| | | Perbutyl O | - | - | - | - | - | - | - | - | - |
| | Surfactant(wt%) | Emulgen A-90 (solid content 100%) | 2.03 | 2.03 | 2.03 | 2.03 | 2.03 | 2.03 | 2.03 | 2.03 | 2.03 |
| | | Emar 20CM (solid content 25%) | 2.58 | 2.58 | 2.58 | 2.58 | 2.58 | 2.58 | 2.58 | 2.58 | 2.58 |
| | | Sanisol B-50 (solid content 50%) | - | - | - | - | - | - | - | - | - |

**[Table 2-2]**

| | | | Example 1 | Example 2 | Example 3 | Example 4 | Example 5 | Example 6 | Example 7 | Example 8 | Example 9 |
|---|---|---|---|---|---|---|---|---|---|---|---|
| | | | Resin dispersion 1 | Resin dispersion 2 | Resin dispersion 3 | Resin dispersion 4 | Resin dispersion 5 | Resin dispersion 6 | Resin dispersion 7 | Resin dispersion 8 | Resin dispersion 9 |
| | | | CHMA/BMA | | | | CHMA/CHA | | | CHMA | CHA |
| | | | 90/10 | 80/20 | 70/30 | 50/48.5 | 90/10 | 80/20 | 70/30 | 100 | 100 |
| | Molecular weight | Mw | 218,900 | 233,100 | 268,200 | 365,500 | 170,000 | 148,000 | 134,800 | 244,700 | 29,500 |
| | | Mn | 89,200 | 89,500 | 95,700 | 118,700 | 61,900 | 48,600 | 42,100 | 93,700 | 8,700 |
| | | Mw/Mn | 2.5 | 2.6 | 2.8 | 3.1 | 2.8 | 3.1 | 3.2 | 2.6 | 3.4 |
| | Solid content | (%) | 30.1 | 29.7 | 29.9 | 29.9 | 30 | 29.7 | 30.1 | 30 | 29.9 |
| | Viscosity | (mPa·s) | 4.3 | 4.3 | 4.1 | 3.9 | 4.2 | 4.1 | 4.1 | 4.1 | 4.0 |
| | Average particle diameter | (nm) | 97 | 102 | 104 | 119 | 108 | 112 | 109 | 100 | 121 |
| Resin physical property | pH | - | 8.2 | 8.2 | 8.5 | 8.3 | 8.0 | 8.5 | 8.1 | 8.1 | 8.2 |
| | Theoretical acid value | (mgKOH/g) | 9.8 | 9.8 | 9.8 | 9.8 | 9.8 | 9.8 | 9.8 | 9.8 | 9.8 |
| | Theoretical glass transition temperature Tg | (°C) | 77 | 70 | 63 | 50 | 76 | 69 | 61 | 85 | 17 |
| | Amount of unreacted monomer | (%) | <0.1 | <0.1 | <0.1 | <0.1 | <0.1 | <0.1 | <0.1 | <0.1 | <0.1 |
| | Storage stability (resin dispersion) | - | ⊚ | ⊚ | ⊚ | ⊚ | ⊚ | ⊚ | ⊚ | ⊚ | ⊚ |
| Physical properties of resin composition | Storage stability | | ⊚ | ⊚ | ⊚ | ⊚ | ⊚ | ⊚ | ⊚ | ⊚ | ⊚ |
| | Adhesion (corona-treated OPP) | | ⊚ | ⊚ | ⊚ | ⊚ | ⊚ | ⊚ | ⊚ | ⊚ | ⊚ |
| | Adhesion(untreated OPP) | | ○ | ○ | ○ | ○ | ○ | ○ | ○ | ○ | ○ |
| | Blocking property(corona-treated OPP) | | ⊚ | ⊚ | ⊚ | ⊚ | ⊚ | ⊚ | ⊚ | ⊚ | ○ |
| | Solvent resistance (ethanol resistance) (corona-treated OPP) | Drying at 60° C | ○ | ⊚ | ⊚ | ○ | ○ | ⊚ | ⊚ | △ | ○ |
| | | Drying at 80° C | ⊚ | ⊚ | ⊚ | ○ | ⊚ | ⊚ | ⊚ | ○ | ⊚ |
| | | Drying at 120° C | ⊚ | ⊚ | ⊚ | ⊚ | ⊚ | ⊚ | ⊚ | ⊚ | ⊚ |
| | Stretchability (PVC) | | ○ | ⊚ | ⊚ | ⊚ | ○ | ⊚ | ⊚ | ⊚ | ⊚ |

**[Table 3-1]**

| | | | Example 10 | Example 11 | Example 12 | Example 13 | Example 14 | Example 15 | Example 16 | Example 17 | Example 18 |
|---|---|---|---|---|---|---|---|---|---|---|---|
| | | | Solvent based resin 1 | Resin dispersion 10 | Resin dispersion 11 | Resin dispersion 12 | Resin dispersion 13 | Resin dispersion 14 | Resin dispersion 15 | Resin dispersion 16 | Resin dispersion 17 |
| | | | CHMA | CHMA/BMA | | | | | | | |
| | | | 100 | 80/20 | | | | | | | |
| | Unsaturated monomer A (wt%) | CHMA | 98.5 | 78.8 | 78.8 | 78.8 | 78.8 | 78.8 | 78.8 | 78.8 | 78.8 |
| | | CHA | - | - | - | - | - | - | - | - | - |
| | | DCPMA | - | - | - | - | - | - | - | - | - |
| | | THFMA | - | - | - | - | - | - | - | - | - |
| | | CPhA | - | - | - | - | - | - | - | - | - |
| | Unsaturated monomer B (wt%) | MAA (containing acid group) | 1.5 | 1.5 | 1.5 | 1.5 | 1.5 | 1.5 | 1.5 | 1.5 | 1.5 |
| | | DMMA (containing amino group) | - | - | - | - | - | - | - | - | - |
| Raw materials used | Unsaturated monomer C (wt%) | MMA | - | - | - | - | - | - | - | - | - |
| | | BMA | - | 19.7 | 19.7 | 19.7 | 19.7 | 19.7 | 19.7 | 19.7 | 19.7 |
| | Polymerization initiator(wt%) | | - | - | 0.24 | 0.24 | 0.11 | 0.19 | 0.243 | 0.243 | 0.243 |
| | | 2,2'-azobis(2-aminod ipropane) dihydrochloride | - | - | - | - | - | - | - | - | - |
| | | Perbutyl O | 1.6 | 5.8 | - | - | - | - | - | - | - |
| | Surfactant(wt%) | Emulgen A-90 (solid content 100%) | - | - | 4.06 | 1.02 | 2.03 | 2.03 | 2.03 | 2.03 | 2.03 |
| | | Emar 20CM (solid content 25%) | - | - | 5.16 | 1.79 | 2.58 | 2.58 | 2.58 | 2.58 | 2.58 |
| | | Sanisol B-50 (solid content 50%) | - | - | - | - | - | - | - | - | - |

**[Table 3-2]**

| | | | Example 10 | Example 11 | Example 12 | Example 13 | Example 14 | Example 15 | Example 16 | Example 17 | Example 18 |
|---|---|---|---|---|---|---|---|---|---|---|---|
| | | | Solvent based resin 1 | Resin dispersion 10 | Resin dispersion 11 | Resin dispersion 12 | Resin dispersion 13 | Resin dispersion 14 | Resin dispersion 15 | Resin dispersion 16 | Resin dispersion 17 |
| | | | CHMA | CHMA/CHA | | | | | | | |
| | | | 100 | 80/20 | | | | | | | |
| | Molecular weight | Mw | 33,800 | 486,200 | 220,700 | 254,100 | 1,195,100 | 723,600 | 224,100 | 228,100 | 230,200 |
| | | Mn | 18,800 | 115,800 | 40,900 | 52,400 | 91,900 | 92,500 | 84,500 | 84,500 | 88,500 |
| | | Mw/Mn | 1.8 | 4.2 | 5.4 | 4.9 | 13.0 | 7.8 | 2.7 | 2.7 | 2.6 |
| | Solid content | (%) | 36.3 | 8.9 | 30 | 28.8 | 30.4 | 30.1 | 29.9 | 29.9 | 29.7 |
| | Viscosity | (mPa·s) | 171.0 | 3.7 | 8.6 | 3.4 | 4.9 | 4.9 | 4.1 | 4.3 | 4.1 |
| | Average particle diameter | (nm) | - | 53,600 | 57 | 201 | 110 | 98 | 101 | 103 | 99 |
| Resin physical property | pH | - | - | 8.3 | 8.2 | 8.3 | 8.1 | 8.2 | 8.2 | 8.3 | 8.2 |
| | Theoretical acid value | (mgKOH/g) | 9.8 | 9.8 | 9.8 | 9.8 | 9.8 | 9.8 | 9.8 | 9.8 | 9.8 |
| | Theoretical glass transition temperature Tg | (°C) | 85 | 70 | 70 | 70 | 70 | 70 | 70 | 70 | 70 |
| | Amount of unreacted monomer | (%) | 0.2 | <0.1 | <0.1 | <0.1 | <0.1 | <0.1 | 0.15 | 0.2 | 0.3 |
| | Storage stability (resin dispersion) | - | - | Δ | ⊚ | ⊚ | ⊚ | ⊚ | ○ | ○ | △ |
| Physical properties of resin composition | Storage stability | | ○ | △ | ⊚ | ⊚ | ⊚ | ⊚ | ○ | ○ | Δ |
| | Adhesion (corona-treated OPP) | | ⊚ | ⊚ | ⊚ | ⊚ | ⊚ | ⊚ | ⊚ | ⊚ | ⊚ |
| | Adhesion(untreated OPP) | | ○ | ○ | ○ | ○ | ○ | ○ | ○ | ○ | O |
| | Blocking property(corona-treated OPP) | | △ | ○ | ⊚ | ⊚ | ⊚ | ⊚ | △ | △ | △ |
| | Solvent resistance (ethanol resistance) (corona-treated OPP) | Drying at 60° C | △ | △ | ⊚ | ⊚ | ⊚ | ⊚ | ○ | △ | △ |
| | | Drying at 80° C | ○ | △ | ⊚ | ⊚ | ⊚ | ⊚ | ⊚ | ⊚ | ○ |
| | | Drying at 120° C | ⊚ | ○ | ⊚ | ⊚ | ⊚ | ⊚ | ⊚ | ⊚ | ○ |
| | Stretchability (PVC) | | ⊚ | △ | ⊚ | ⊚ | ⊚ | ⊚ | ○ | △ | △ |

**[Table 4-1]**

| | | | Example 19 | Example 20 | Example 21 | Example 22 | Example 23 | Example 24 | Example 25 | Example 26 | Example 27 |
|---|---|---|---|---|---|---|---|---|---|---|---|
| | | | Resin dispersion 18 | Resin dispersion 19 | Resin dispersion 20 | Resin dispersion 21 | Resin dispersion 22 | Resin dispersion 23 | Resin dispersion 24 | Resin dispersion 25 | Resin dispersion 26 |
| | | | CHMA/BMA | CPhA | THFMA | CHMA/DCPMA | CHMA/BMA | CHMA/BMA | CHMA/DMMA | CHMA/DMMA | CHMA/DMMA/BMA |
| | | | 80/20 | 60/38.5 | 50/50 | 50/48.5 | 40/40 | 30/68.5 | 92.6/7.4 | 98.1/1.9 | 74.1/7.4/18.5 |
| | Unsaturated monomer A (wt%) | CHMA | 78.8 | - | - | 50 | 40 | 30 | 92.6 | 98.1 | 74.1 |
| | | CHA | - | - | - | - | - | - | - | - | - |
| | | DCPMA | - | - | - | 48.5 | - | - | - | - | - |
| | | THFMA | - | - | 98.5 | - | - | - | - | - | - |
| | | CPhA | - | 98.5 | - | - | - | - | - | - | - |
| | Unsaturated monomer B (wt%) | MAA (containing acid group) | 1.5 | 1.5 | 1.5 | 1.5 | 15 | 1.5 | - | - | - |
| | | DMMA (containing amino group) | - | - | - | - | - | - | 7.4 | 1.9 | 7.4 |
| | Unsaturated monomer C (wt%) | MMA | - | - | - | - | - | - | - | - | - |
| Raw materials used | | BMA | 19.7 | - | - | - | 45 | 68.5 | - | - | 18.5 |
| | Polymerization initiator(wt%) | Potassium persulfate | 0.243 | 0.243 | 0.243 | 0.243 | 0.243 | 0.243 | - | - | - |
| | | 2.2'-azobis(2-aminodipropane) dihydrochloride | - | - | - | - | - | - | 0.25 | 0.25 | 0.25 |
| | | Perbutyl O | - | - | - | - | - | - | - | - | - |
| | Surfactant(wt%) | Emulgen A-90 (solid content 100%) | 2.03 | 2.03 | 2.03 | 2.03 | 2.03 | 2.03 | 2 | 2 | 2 |
| | | Emar 20CM (solid content 25%) | 2.58 | 2.58 | 2.58 | 2.58 | 2.58 | 2.58 | - | - | - |
| | | Sanisol B-50 (solid content 50%) | - | - | - | - | - | - | 5.2 | 5.2 | 5.2 |

**[Table 4-2]**

| | | | Example 19 | Example 20 | Example 21 | Example 22 | Example 23 | Example 24 | Example 25 | Example 26 | Example 27 |
|---|---|---|---|---|---|---|---|---|---|---|---|
| | | | Resin dispersion 18 | Resin dispersion 19 | Resin dispersion 20 | Resin dispersion 21 | Resin dispersion 22 | Resin dispersion 23 | Resin dispersion 24 | Resin dispersion 25 | Resin dispersion 26 |
| | | | CHMA/BMA | CPhA | THFMA | CHMA/DCPMA | CHMA/BMA | CHMA/BMA | CHMA/DMMA | CHMA/DMMA | CHMA/DMMA/BMA |
| | | | 80/20 | 60/38.5 | 50/50 | 50/48.5 | 40/40 | 30/68.5 | 92.6/7.4 | 98.1/1.9 | 74.1/7.4/18.5 |
| | Molecular weight | Mw | 229,800 | 123,700 | 297,800 | 215,500 | 387,200 | 439,300 | 286,500 | 268,800 | 307,700 |
| | | Mn | 88,400 | 39,900 | 107,200 | 74,300 | 117,300 | 145,600 | 34,500 | 31,000 | 98,000 |
| | | Mw/Mn | 2.6 | 3.1 | 2.8 | 2.9 | 3.3 | 3.0 | 8.3 | 8.7 | 3.1 |
| | Solid content | (%) | 29.6 | 30 | 29.7 | 30.2 | 30.2 | 29.5 | 30.1 | 29.5 | 32.7 |
| | Viscosity | (mPa·s) | 4.2 | 4.0 | 3.9 | 4.0 | 7650 | 3.8 | 8.2 | 8.7 | 8.4 |
| | Average particle diameter | (nm) | 105 | 106 | 110 | 119 | 112 | 117 | 111 | 106 | 112.7 |
| | pH | - | 8.2 | 8.1 | 8.1 | 8.1 | 8.2 | 8.3 | 5.5 | 5.5 | 5.4 |
| Resin physical property | Theoretical acid value | (mgKOH/g) | 9.8 | 9.8 | 9.8 | 9.8 | 98 | 9.8 | - | - | - |
| | Theoretical glass transition temperature Tg | (°C) | 70 | 60 | 83 | 124 | 73 | 39 | 77 | 82 | 64 |
| | Amount of unreacted monomer | (%) | 0.5 | <0.1 | <0.1 | <0.1 | <0.1 | <0.1 | <0.1 | <0.1 | <0.1 |
| | Storage stability (resin dispersion) | - | Δ | △ | △ | △ | Δ | ○ | ⊚ | ○ | ⊚ |
| Physical properties of resin composition | Storage stability | | Δ | Δ | △ | △ | △ | ○ | ⊚ | ⊚ | ⊚ |
| | Adhesion (corona-treated OPP) | | ⊚ | ○ | ○ | △ | △ | △ | ⊚ | ⊚ | ⊚ |
| | Adhesion(untreated OPP) | | ○ | △ | △ | △ | △ | △ | ○ | ○ | ○ |
| | Blocking property(corona-treated OPP) | | △ | ○ | ○ | ○ | △ | △ | ⊚ | ⊚ | ⊚ |
| | Solvent resistance (ethanol resistance) (corona-treated OPP) | Drying at 60° C | △ | △ | △ | △ | △ | △ | ○ | △ | ⊚ |
| | | Drying at 80° C | △ | △ | △ | △ | △ | △ | ○ | ○ | ⊚ |
| | | Drying at 120° C | △ | ○ | △ | △ | △ | △ | ⊚ | ⊚ | ⊚ |
| | Stretchability (PVC) | | △ | △ | △ | △ | △ | △ | ⊚ | ⊚ | ⊚ |

**[Table 5-1]**

| | | | Example 28 | Example 29 | Example 30 | Comparative Example 1 | Comparative Example 2 | **Comparative** Example 3 | Comparative Example 4 |
|---|---|---|---|---|---|---|---|---|---|
| | | | Resin dispersion 27 | Resin dispersion 28 | Resin dispersion 29 | Resin dispersion 30 | Resin dispersion 31 | Resin dispersion 32 | Resin dispersion 33 |
| | | | CHMA/DMMA/BMA | CHMA+CHA/0MMA | CHMA+CHA/DMMA | BMA | MMA | MMA | CHMA |
| | | | 78.5/1.9/19.6 | 64.8+27.8/7.4 | 68.7+29.4/1.9 | | | | |
| | Unsaturated monomer A (wt%) | CHMA | 78.5 | 64.8 | 68.7 | - | - | - | 100 |
| | | CHA | - | 27.8 | 29.4 | - | - | - | - |
| | | DCPMA | - | - | - | - | - | - | - |
| | | THFMA | - | - | - | - | - | - | - |
| | | CPhA | - | - | - | - | - | - | - |
| | Unsaturated monomer B (wt%) | MAA (containing acid group) | - | - | - | 1.5 | 1.5 | - | - |
| | | DMMA (containing amino group) | 1.9 | 7.4 | 1.9 | - | - | - | - |
| Raw materials used | Unsaturated monomer C (wt%) | MMA | - | - | - | - | 98.5 | 100 | - |
| | | BMA | 19.6 | - | - | 98.5 | - | - | - |
| | Polymerization initiator(wt%) | Potassium persulfate | - | - | | 0.24 | 0.243 | 0.243 | 0.243 |
| | | 2,2'-azobis(2-aminodipropane) dihydrochloride | 0.25 | 0.25 | 0.25 | - | - | - | - |
| | | Perbutyl O | - | - | - | - | - | - | - |
| | Surfactant(wt%) | Emulgen A-90 (solid content 100%) | 2 | 2 | 2 | 2.03 | 2.03 | 2.03 | 2.03 |
| | | Emar 20CM (solid content 25%) | - | - | - | 2.58 | 2.58 | 2.58 | 2.58 |
| | | Sanisol B-50 (solid content 50%) | 5.2 | 5.2 | 5.2 | - | - | - | - |

**[Table 5-2]**

| | | | Example 28 | Example 29 | Example 30 | Comparative Example 1 | Comparative Example 2 | Comparative Example 3 | Comparative Example 4 |
|---|---|---|---|---|---|---|---|---|---|
| | | | Resin dispersion 27 | Resin dispersion 28 | Resin dispersion 29 | Resin dispersion 30 | Resin dispersion 31 | Resin dispersion 32 | Resin dispersion 33 |
| | | | CHMA/DMMA/BMA | CHMA+CHA/DMMA | CHMA+CHA/DMMA | BMA | MMA | MMA | CHMA |
| | | | 78.5/1.9/19.6 | 64.8+27.8/7.4 | 68.7+29.4/1.9 | | | | |
| | Molecular weight | Mw | 310,500 | 115,700 | 118,200 | 372,400 | 204,000 | 235,700 | 209,500 |
| | | Mn | 94,100 | 43,000 | 42,200 | 127,000 | 65,700 | 76,300 | 83,800 |
| | | Mw/Mn | 3.3 | 2.7 | 2.8 | 2.9 | 3.1 | 3.1 | 2.5 |
| | Solid content | (%) | 30 | 33.1 | 29.8 | 30 | 29.9 | 29.6 | 30.1 |
| | Viscosity | (mPa·s) | 8.5 | 11.7 | 10.6 | 4.1 | 4.7 | 4.6 | 4.4 |
| | Average particle diameter | (nm) | 103 | 113.4 | 106 | 122 | 78 | 84 | 96 |
| Resin physical property | pH | - | 5.5 | 5.6 | 5.4 | 8 | 8.2 | 8.1 | 8.3 |
| | Theoretical acid value | (mgKOH/g) | - | - | - | 9.8 | 9.8 | 0 | 0 |
| | Theoretical glass transition temperature Tg | (°C) | 67 | 56 | 60 | 22 | 106 | 105 | 85 |
| | Amount of unreacted monomer | (%) | <0.1 | <0.1 | <0.1 | <0.1 | <0.1 | <0.1 | <0.1 |
| | Storage stability (resin dispersion) | - | ○ | ⊚ | ○ | ⊚ | ⊚ | × | × |
| Physical properties of resin composition | Storage stability | | ⊚ | ⊚ | ⊚ | ⊚ | ⊚ | × | × |
| | Adhesion (corona-treated OPP) | | ⊚ | ⊚ | ⊚ | × | × | × | ⊚ |
| | Adhesion(untreated OPP) | | ○ | ○ | ○ | × | × | × | ○ |
| | Blocking property(corona-treated OPP) | | ⊚ | ⊚ | ⊚ | × | ⊚ | ⊚ | ⊚ |
| | Solvent resistance (ethanol resistance) (corona-treated OPP) | Drying at 60° C | ⊚ | ○ | ○ | × | × | × | △ |
| | | Drying at 80° C | ⊚ | ○ | ○ | △ | × | × | △ |
| | | Drying at 120° C | ⊚ | ⊚ | ⊚ | ⊚ | ⊚ | ⊚ | ⊚ |
| | Stretchability (PVC) | | ⊚ | ⊚ | ⊚ | × | × | × | ○ |

In the table, "CHMA" is cyclohexyl methacrylate. In the table, "CHA" is cyclohexyl acrylate. In the table, "DCPMA" is dicylopentanyl methacrylate. In the table, "THFMA" is tetrahydrofurfuryl methacrylate. In the table, "CPhA" is 4-chlorophenylacrylate. In the table, "MAA" is methacrylic acid. In the table, "DMMA" is 2-(dimethylamino)ethyl methacrylate. In the table, "MMA" is methyl methacrylate. In the table, "BMA" is butyl methacrylate. In the table, "Mw" is the weight average molecular weight. In the table, "Mn" is the number average molecular weight. In the table, "corona-treated OPP" is a polypropylene resin base material (polyolefin resin base material) having a surface that has been subjected to corona treatment. In the table, "untreated OPP" is an untreated polypropylene resin base material (polyolefin resin base material). In the table, "PVC" refers to adhesive polyvinyl chloride film.

As is apparent from the above Table, when a resin containing a copolymer including a specific monomer as a constituent unit is contained in a resin composition, a coating film of the resin composition having solvent resistance can be formed on the applied surface.

Among them, the resins of Examples 1 to 9, 12 to 15, and 25 to 30 containing emulsion polymers, when contained in a resin composition, were more excellent in storage stability than the resins of Examples 10 and 11.

Furthermore, the resins of Examples 1 to 9, 12 to 15, and 25 to 30 including unreacted monomers in the content of 0.1% by mass or less with respect to the total amount of the resin, when contained in a resin composition, were able to form a coating film with higher blocking resistance as compared with the resins of Examples 16 to 19.

Furthermore, the resins of Examples 1 to 9, 12 to 15, and 25 to 30 containing a monomer A having a side chain moiety SP value in the range of 8.0 to 11.0, when contained in a resin composition, were able to form a coating film with higher solvent resistance as compared with the resin of Example 20.

Furthermore, the resins of Examples 1 to 9, 12 to 15, and 25 to 30 containing a monomer A having a water/1-octanol partition coefficient (Log P) in the range of 1.9 or more and 4.8 or less, when contained in the resin composition, were able to form a coating film with higher solvent resistance even as compared with the resin of Example 21.

Furthermore, the resins of Examples 1 to 9, 12 to 15, and 25 to 30 containing resins with Tg in the range of 0°C or more and 120°C or less, when contained in the resin composition, were able to form a coating film having higher solvent resistance and adhesion even as compared with the resin of Example 22.

Furthermore, the resins of Examples 1 to 9, 12 to 15, and 25 to 30 containing a monomer A in a proportion of 50% or more with respect to the total amount of the copolymer, and a monomer B in a proportion of 0.1% or more and 10% or less with respect to the total amount of the copolymer were able to form coating films with high solvent resistance, adhesion, and blocking resistance even as compared with the resins of Examples 23 and 24, when the resins were contained in the resin composition.

On the other hand, the resins of Comparative Examples 1 to 3 that do not contain monomer A and the resin of Comparative Example 4 that does not contain monomer B were not able to form a coating film with high solvent resistance or blocking resistance even if they were contained in the resin composition. Therefore, the effects of the present invention are not achieved.

## Claims

1. A resin comprising a copolymer comprising the following monomer A and monomer B as constituent units:
a monomer **A:** a monomer comprising at least one or more ring structures selected from the group consisting of an alicyclic structure, a heterocyclic structure, and an aromatic ring structure,
a monomer **B:** a monomer comprising an acidic group or a basic group.

2. A resin dispersion comprising the resin according to claim 1 as a polymer fine particle dispersion.

3. The resin dispersion according to claim **2,** wherein the resin comprised as the polymer fine particle dispersion is an emulsion polymer.

4. The resin dispersion according to claim 2 or **3,** wherein a content of an unreacted monomer derived from the copolymer is 0.1% by mass or less with respect to a total amount of the resin dispersion.

5. The resin dispersion according to any one of claims 2 to 4,
wherein a side chain moiety SP value, which is an SP value calculated for a chemical structure moiety defined by R₂ in the following formula (1) of the monomer A, is 8.0 or more and 11.0 or less:
CH₂ = C(R₁) - R₂ Formula (1)
wherein R₁ is hydrogen or a methyl group.

6. The resin dispersion according to any one of claims 2 to 5, wherein the monomer A has a water/1-octanol distribution coefficient (Log P) of 1.9 or more and 4.8 or less.

7. The resin dispersion according to any one of claims 2 to 6, wherein the resin has a glass transition temperature (Tg) of 0°C or more and 120°C or less.

8. The resin dispersion according to any one of claims 2 to 7,
comprising the monomer A in a proportion of 50% or more with respect to a total amount of the copolymer, and
the monomer B in a proportion of 0.1% or more and 10% or less with respect to the total amount of the copolymer.

9. A resin composition comprising the resin dispersion according to any one of claims 2 to 8.
